(19) **Europäisches Patentamt / European Patent Office / Office européen des brevets**

(11) **EP 4 299 167 B1**

(12) **EUROPEAN PATENT SPECIFICATION**

(45) Date of publication and mention
of the grant of the patent:
**24.09.2025 Bulletin 2025/39**

(21) Application number: **22759237.5**

(22) Date of filing: **28.01.2022**

(51) International Patent Classification (IPC):
**B01D 69/10** (2006.01)   **B32B 5/02** (2006.01)
**B32B 5/06** (2006.01)   **B32B 5/26** (2006.01)
**D04H 1/4374** (2012.01)   **D04H 1/435** (2012.01)
**D04H 1/732** (2012.01)   **D21H 13/24** (2006.01)
**D21H 15/00** (2006.01)   **D21H 27/30** (2006.01)

(52) Cooperative Patent Classification (CPC):
**D21H 15/00; B01D 69/1071; B32B 5/022;
B32B 5/06; B32B 5/266; D04H 1/435;
D04H 1/4374; D21H 13/24; D21H 27/30;**
B32B 2250/20; B32B 2260/023; B32B 2260/046;
B32B 2262/02; B32B 2262/0253; B32B 2262/0284;
(Cont.)

(86) International application number:
**PCT/JP2022/003206**

(87) International publication number:
**WO 2022/181195 (01.09.2022 Gazette 2022/35)**

(54) **SEPARATION-MEMBRANE NONWOVEN FABRIC AND MANUFACTURING METHOD THEREFOR**

TRENNMEMBRANVLIESSTOFF UND HERSTELLUNGSVERFAHREN DAFÜR

TISSU NON TISSÉ À MEMBRANE DE SÉPARATION ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.02.2021 JP 2021027053**

(43) Date of publication of application:
**03.01.2024 Bulletin 2024/01**

(73) Proprietors:
• **National Institute for Materials Science**
**Tsukuba-shi, Ibaraki 305-0047 (JP)**
• **Hirose Paper MFG Co., Ltd.**
**Tosa-shi, Kochi 781-1103 (JP)**

(72) Inventors:
• **ICHINOSE, IZUMI**
**Tsukuba-shi, Ibaraki 305-0047 (JP)**
• **BIN ISMAIL, Edhuan**
**Tsukuba-shi, Ibaraki 305-0047 (JP)**
• **TSUBATA, Takako**
**Tsukuba-shi, Ibaraki 305-0047 (JP)**
• **SAKAMOTO, Masataka**
**Tosa-shi, Kochi 781-1103 (JP)**
• **MIZUNO, Yoshiki**
**Tosa-shi, Kochi 781-1103 (JP)**

(74) Representative: **Dehns**
**10 Old Bailey**
**London EC4M 7NG (GB)**

(56) References cited:
EP-A1- 2 659 955      WO-A1-2011/049231
JP-A- 2000 005 576    JP-A- 2000 024 659
JP-A- 2015 208 881    JP-A- H04 317 729
JP-B2- H0 421 526     JP-B2- H0 535 009

EP 4 299 167 B1

(52)  Cooperative Patent Classification (CPC): (Cont.)
      B32B 2262/144; B32B 2262/16; B32B 2307/726;
      B32B 2307/7376

**Description**

Technical Field

The present invention relates to a nonwoven fabric for a separation membrane and a method of producing the same. A nonwoven fabric for a separation membrane of the present invention is used as a support (It is also referred to as a substrate.) for coating of a resin solution for producing a separation membrane such as a microfiltration membrane (MF membrane), an ultrafiltration membrane (UF membrane), a nanofiltration membrane (NF membrane), or a reverse osmosis membrane (RO membrane).

Background Art

Separation membranes such as MF membranes, UF membranes, NF membranes, and RO membranes are used in various applications such as food, medical treatment, and wastewater treatment, and in particular, in recent years, separation membranes have come to be often used in the field of drinking water production, for example, in the field of clean water treatment, clean water production by seawater desalination, and lower waste water treatment such as activated sludge process. In the production of these separation membranes, a process is used in which a resin solution is applied to a nonwoven fabric and solidified. At that time, the nonwoven fabric used as a support affects the performance of phase separation of a resin layer, and as a result, has a large influence on a blocking rate of the resulting separation membrane and liquid permeation performance. Furthermore, a step of applying the resin solution also affects the cost and treatment performance of the separation membrane as a product. For example, a nonwoven fabric that can obtain sufficient tensile strength even if it is thin makes it possible to reduce the weight of the separation membrane module and increase the membrane area per unit weight. Furthermore, when the separation membrane is produced by applying a small amount of resin, the raw material cost can be reduced. For this reason, research on performance enhancement of nonwoven fabrics has been conducted in various fields.

Some of the conventional nonwoven fabrics for a separation membrane are designed based on a concept that a two-layer or multilayer structure is used, and a resin solution is applied to a surface having a low density to allow a coating resin to permeate therethrough and prevent a bleed-through of the resin solution on the surface having a high density. In this case, a penetration speed of the resin solution having high viscosity is reduced to prevent the bleed-through. Although the density is not necessarily described in Patent Literature 1, it is proposed to prevent the bleed-through of the resin solution (cast liquid) by mixing thick fibers on a surface layer (coating surface of the resin solution) side, forming a two-layer structure using thin fibers on a back side, and densifying the back side.

In the production of an asymmetric membrane, a porous membrane is produced by applying a resin solution and then immersing the resin solution in a coagulation bath, but when a rate of penetration of the resin solution is high, it is necessary to increase a conveyance speed of the nonwoven fabric and immerse the nonwoven fabric in the coagulation bath before the applied resin reaches the back surface. Furthermore, a low-viscosity resin solution having a high penetration rate cannot be used, that is, there is a limit to the coating of a low-molecular-weight resin or a low-concentration resin solution. If most of the resin solution penetrates into the nonwoven fabric, it becomes difficult to control the pore size in the non-solvent-induced phase separation. Moreover, the resin solution that has reached the back surface tends to form a dense layer, which causes a decrease in the permeation flux of the solution as a separation membrane.

On the other hand, when the nonwoven fabric was densified by compression, the resin solution that penetrated into the nonwoven fabric did not cause ideal phase separation, and the pore size tended to decrease. That is, it inhibited an increase in the pore diameter in the phase separation of the resin solution that penetrated the surface having a high density, resulting in a decrease in the permeation flux of the separation membrane.

In the support of Patent Literature 1, since the permeability of the coating resin in the surface layer mixed with thick fibers is high, it is necessary to increase the coating thickness of the resin, and this may also cause a decrease in the permeation flux of the separation membrane.

Nonwoven fabrics have already been used as substrates for various separation membranes, and nonwoven fabrics and nonwoven fabrics having many pinholes in which penetration of a resin solution is significantly poor have not been put into practical use. The nonwoven fabric obtained by the conventional dry web has many pinholes, and there are cases where the resin solution bleeds through and poor defoaming, which limits the production conditions of the separation membrane. Furthermore, a substrate obtained by subjecting the surface of a nonwoven fabric to fluorine processing for the purpose of suppressing bleed-through is also used, but bleed-through is not completely prevented, and uneven application of a resin solution is likely to occur. These problems still limit the conditions of use of the resin solution.

In order to solve the problem of pinholes in nonwoven fabrics obtained in dry webs, a method of combining wet webs has been devised. For example, Patent Literature 2 proposes to produce a two-layer nonwoven fabric by producing a high-density nonwoven fabric by a wet web using relatively thin fibers, winding the nonwoven fabric into a roll shape, forming a low-density nonwoven fabric on the nonwoven fabric by a dry web using relatively thick fibers, and finally subjecting the nonwoven fabric to a thermal calendering treatment. Although the number of pinholes is reduced by combining the wet webs, the weight per unit area is increased by superposition. Furthermore, since nonwoven fabrics having different strengths form layers, a tensile strength in the lamination direction is weak, and thinning becomes difficult. Moreover, in a case where the integration of the upper and lower layers is not sufficient, delamination occurs depending on conditions. Note that, in Patent Literature 2, the distinction between the back surface and the surface is not described.

On the other hand, Patent Literature 3 relates to a separation membrane having a separation-functional membrane, and it is described that a nonwoven fabric having a surface layer having a high density and a back layer having a low density is suitable as a support thereof. This is an idea that when liquid flows from a surface layer having a high density to a back layer having a low density, the speed is rapidly reduced, so that the resin solution does not reach the back surface, and it is important to form recesses on the back surface by embossing or the like. In some cases, a method of reducing thermal compression of the back surface by controlling the upper and lower roll temperatures in calendering is adopted, but information on the internal structure of the nonwoven fabric is not shown other than density. That is, Patent Literature 3 has no information on the size and pore diameter of the fibers inside the nonwoven fabric, and does not disclose a technique for controlling pores.

Although it has been described that there are problems of tensile strength and delamination in the two-layer structure as in Patent Literature 2, Patent Literature 4 proposes to improve an adhesive force between the nonwoven fabric and the applied resin by using thicker fibers than before. Patent Literature 4 is intended to solve the problem of the separation membrane support described in Patent Literature 1, and for the purpose of preventing peeling of the support (nonwoven fabric) and the separation functional layer (resin layer) in long-term use, heteromorphic cross-sectional fibers having a non-circular cross section are mixed into the surface layer. As a result, although the improvement in adhesive strength can be achieved, a problem that pinholes of the coating membrane (separation membrane) are generated by raising of fibers having a heteromorphic cross section, and defects are generated on the surface of the separation membrane may also occur. That is, it is still unsatisfactory from the viewpoint of stable production of the separation membrane.

In Patent Literature 5, a multilayer structure is formed by using long fibers, and studies for achieving both a bleed-through prevention property and water permeability are conducted. A nonwoven fabric obtained by papermaking using long fibers is excellent in strength, but has a poor formation (fiber density constituting the nonwoven fabric is likely to be unevenly distributed), and is likely to have variations in the bleed-through preventing property and water permeability, and there are many problems from the viewpoint of production stability. Furthermore, when long fibers are used to prevent strike-through, it is necessary to use a large amount of fibers, which is also disadvantageous in terms of cost.

Patent Literature 6 describes an asymmetric nonwoven fabric for a filter membrane used for water treatment, comprises a sheet-like support for relatively coarse polyester fibers and a dense layer of relatively fine polyester fibers formed on one surface of the support layer.

Patent Literature 7 discloses a method for preparing a nonwoven support for a semipermeable membrane, using a papermaking method.

Citation List

Patent Literature

Patent Literature 1: JP S60-238103 A
Patent Literature 2: JP S61-222506 A
Patent Literature 3: JP 2003-245530 A
Patent Literature 4: JP No. H11-347383 A
Patent Literature 5: WO 2010/126113 A
Patent Literature 6: JP 2000-005576
Patent Literature 7: EP 2 659 995 A1

Summary of Invention

Technical Problem

The present invention is intended to solve the above-mentioned problems in the prior art, and it is an object of the present invention to provide a nonwoven fabric for a separation membrane which is compatible with both of the bleed-through prevention property of a coating resin (resin solution for forming a separation membrane applied to a nonwoven fabric) and the high water permeability of a separation membrane to be produced, which have been in a trade-off relationship so far. Furthermore, another object of the present invention is to provide a method of producing such a nonwoven fabric for a separation membrane. Although there has been a concept of changing a structure of the nonwoven fabric on the coating surface and the non-coating surface of the resin solution, there have been problems such as densification of the interface due to bonding processing of a plurality of layers having different structures, deterioration of the water permeability of the separation membrane due to thermal compression in the process of producing the nonwoven fabric, and inhibition of phase separation of the applied resin due to densification of the nonwoven fabric. Furthermore, a method of using thick fibers for improving the adhesive strength between the coating resin and the nonwoven fabric has also been adopted, but the homogeneity of the surface of the nonwoven fabric (coating surface of the resin solution) is lowered, and the coatability of the coating resin by raising of thick resin is adversely affected, which causes formation of pinholes in the separation membrane.

Solution to Problem

In order to solve such problems, the present invention provides a method of producing a nonwoven fabric substrate for a separation membrane, as defined in claim 1.

A second aspect of the present invention relates to a nonwoven fabric substrate for a separation membrane as defined in claim 5.

Particular embodiments of the invention are defined in the dependent claims.

One aspect of the nonwoven fabric substrate for a separation membrane of the present disclosure is a nonwoven fabric substrate for a separation membrane including a nonwoven fabric for a separation membrane composed of two or more layers, the nonwoven fabric substrate for a separation membrane including: a surface layer; a back surface layer; and an optional intermediate layer, wherein a coating surface of a coating solution during membrane formation is a surface of the surface layer, and, when the nonwoven fabric substrate is impregnated with the coating solution for membrane formation, the surface layer has a large Laplace force and the back surface layer and the optional intermediate layer have a small Laplace force.

The nonwoven fabric substrate for a separation membrane of the present invention is a nonwoven fabric substrate for a separation membrane includes a nonwoven fabric for a separation membrane composed of two or more layers, the nonwoven fabric substrate for a separation membrane including: a surface layer having a coating surface of a coating solution for membrane formation; a back surface layer; and an optional intermediate layer, wherein the surface layer has an average pore diameter smaller than that of the back surface layer or the optional intermediate layer located under the surface layer, and a difference between the average pore diameter of the surface layer and the average pore diameter of the back surface layer or the optional intermediate layer is 0.5 $\mu$m or more.

In the nonwoven fabric substrate for a separation membrane of the present invention, the surface layer is composed of one or more kinds of fine fibers having a small fiber diameter and one or more kinds of thick fibers having a larger fiber diameter than the fine fibers, and the back surface layer and the optional intermediate layer may be configured to include a portion consisting substantially of the thick fibers.

In the nonwoven fabric substrate for a separation membrane of the present invention, a fiber diameter of the fine fibers is in a range of 0.01 dtex or more and 0.5 dtex or less, and a fiber diameter of the thick fibers is in a range of more than 0.5 dtex and 10 dtex or less.

In the nonwoven fabric substrate for a separation membrane of the present invention, a fiber diameter of the fine fibers may be in a range of 0.05 dtex or more and 0.5 dtex or less, and a fiber diameter of the thick fibers is in a range of more than 0.5 dtex and 3.5 dtex or less.

In the nonwoven fabric substrate for a separation membrane of the present invention, a thickness of the nonwoven fabric may be in a range of 30 to 300 $\mu$m, and a composition ratio in a thickness direction of the surface layer, the back surface layer, and the optional intermediate layer (a ratio of a thickness of the surface layer to a thickness of the back surface layer and the optional intermediate layer) may be 1:9 to 9:1.

The nonwoven fabric substrate for a separation membrane of the present invention may include further comprising a portion in which fibers constituting the surface layer, the back surface layer, and the optional intermediate layer are continuously entangled between the layers.

In the nonwoven fabric substrate for a separation membrane of the present invention, a material of the nonwoven fabric may be one or more materials selected from the group consisting of polyethylene terephthalate (PET), polyethylene (PE), polypropylene (PP), a composite material of polypropylene and polyethylene (PP/PE), polyphenylene sulfide (PPS), and mixtures thereof. Here, the materials of the surface layer, the back surface layer, and the optional intermediate layer may be the same or different from each other.

The nonwoven fabric substrate for a separation membrane of the present invention may be subjected to a surface treatment for controlling the wettability of the nonwoven fabric.

A method of producing a nonwoven fabric substrate for a separation membrane of the present invention includes sequentially papermaking a fiber dispersion liquid for a surface layer composed of one or more kinds of fine fibers having a small fiber diameter and one or more kinds of thick fibers having a larger fiber diameter than the fine fibers, a fiber dispersion liquid for an optional intermediate layer consisting of the thick fibers, and a fiber dispersion liquid for a back surface layer consisting of the thick fibers using a wet papermaking method.

In the method of producing a nonwoven fabric substrate for a separation membrane of the present invention, the fiber dispersion liquid for the surface layer may be obtained by dispersing 1 to 50 wt% of fine fibers having a fiber diameter in a range of 0.01 dtex or more and 0.5 dtex or less and 50 to 99 wt% of thick fibers having a fiber diameter in a range of more than 0.5 dtex and 10 dtex or less in water, the fiber dispersion liquid for the back surface layer and the fiber dispersion liquid for the optional intermediate layer may be obtained by dispersing 100 wt% of thick fibers having a fiber diameter in a range of more than 0.5 dtex and 10 dtex or less in water, and the fine fibers and the thick fibers may have a fiber length in a range of 1 to 10 mm.

In the method of producing a nonwoven fabric substrate for a separation membrane of the present invention, the fiber dispersion liquid for the surface layer may be obtained by dispersing 5 to 50 wt% of fine fibers having a fiber diameter in a range of 0.05 dtex or more and 0.5 dtex or less and 50 to 95 wt% of thick fibers having a fiber diameter in a range of more than 0.5 dtex and 3.5 dtex or less in water, and the fiber dispersion liquid for the back surface layer and the fiber dispersion liquid for the optional intermediate layer may be obtained by dispersing 100 wt% of thick fibers having a fiber diameter in a range of more than 0.5 dtex and 3.5 dtex or less in water.

The method of producing a nonwoven fabric substrate for a separation membrane of the present invention may further include subjecting a nonwoven fabric obtained by the papermaking to a surface treatment to control wettability of the nonwoven fabric.

Advantageous Effects of Invention

According to the nonwoven fabric substrate for a separation membrane according to an aspect of the present invention, in a nonwoven fabric for a separation membrane composed of two or more layers, by having a surface layer, a back surface layer, and an optional intermediate layer, setting a coating surface of the coating solution during membrane formation as a surface of the surface layer, and, when the nonwoven fabric substrate is impregnated with the coating solution for membrane formation, making the surface layer exhibits a large Laplace force and making the back surface layer and the optional intermediate layer exhibit a small Laplace force, it is possible to achieve both of the prevention of bleed-through of a coating resin and high water permeability of a separation membrane to be produced, which have been in a trade-off relationship heretofore.

Furthermore, according to the nonwoven fabric substrate for a separation membrane according to another aspect of the present invention, in a nonwoven fabric for a separation membrane composed of two or more layers, the nonwoven fabric substrate for a separation membrane includes: a surface layer having a coating surface of a coating solution for membrane formation; a back surface layer; and an optional intermediate layer, the surface layer has an average pore diameter smaller than that of the back surface layer or the optional intermediate layer located under the surface layer, and a difference between the average pore diameter of the surface layer and the average pore diameter of the back surface layer or the optional intermediate layer is 0.5 $\mu$m or more, and thereby, it is possible to achieve both of the prevention of bleed-through of a coating resin and the high water permeability of a separation membrane to be produced, which have been in a trade-off relationship so far.

More specifically, in the nonwoven fabric substrate for a separation membrane of the present invention, since one or more kinds of fine fibers having a small fiber diameter are incorporated in the surface layer of which surface is a coating surface of a resin solution, the surface layer exerts a large Laplace force, and an average pore diameter of the surface layer is smaller by 0.5 $\mu$m or more than an average pore diameter of the back surface layer or the optional intermediate layer located under the surface layer, and the coated resin substantially penetrates only into a surface layer region, so that the resin solution can be left on the coated surface (on a surface of the surface layer), solvent exchange by non-solvent induced phase separation is facilitated, and a high-performance separation membrane can be produced. Furthermore, since the back surface layer and the optional intermediate layer are configured to include a portion consisting substantially of one or more kinds of the thick fibers having a larger fiber diameter than the fine fibers, it is possible to prevent the bleed-through of the resin solution, and it is possible to suppress occurrence of defects such as pinholes in the separation membrane in a step of applying the resin solution.

Furthermore, according to the method of producing a nonwoven fabric substrate for a separation membrane of the present invention, since a surface (outermost surface) of the surface layer to be a surface coated with a coating solution during membrane formation of the separation membrane is covered with relatively thin fibers, even if raising occurs in the papermaking process, the raising can be suppressed by subsequent heat treatment. Therefore, the quality of the separation membrane prepared using the nonwoven fabric substrate for a separation membrane of the present invention is improved.

Moreover, according to the nonwoven fabric substrate for a separation membrane of the present invention, the separation membrane can be produced with a small amount of coating solution as compared with a conventional nonwoven fabric, and cost reduction due to reduction of the coating resin and improvement of liquid permeation performance per unit weight can be achieved.

In addition, according to the nonwoven fabric substrate for a separation membrane of the present invention, since the thick fibers are mixed in the surface layer of which surface is the coating surface of the resin solution, the anchor effect when the coating solution is solidified is enhanced, and the nonwoven fabric substrate can withstand the use environment of a backwashing step.

Furthermore, according to the method of producing a nonwoven fabric substrate for a separation membrane of the present invention, by using a "papermaking method" in a process for producing a wet nonwoven fabric, in a nonwoven fabric to be obtained, there is a portion in which fibers constituting the surface layer, the back surface layer, and the optional intermediate layer are continuously entangled between the layers, and the entanglement of the fibers inside the nonwoven fabric improves the adhesiveness between the layers. As a result, welding can be performed at a low compression pressure in the production process of the nonwoven fabric, and the nonwoven fabric is excellent in tensile strength and is hardly peeled off. Therefore, according to the nonwoven fabric substrate for a separation membrane of the present invention, it is possible to produce a separation membrane excellent in liquid permeation performance by non-solvent-induced phase separation.

Brief Description of Drawings

Fig. 1 is a conceptual diagram schematically showing a structure of a nonwoven fabric of the present invention.

Fig. 2 is a conceptual diagram of pore diameters in a surface layer and a back surface layer of the nonwoven fabric shown in Fig. 1.

Fig. 3 is a conceptual diagram of a pore diameter distribution in consideration of pores in a thickness direction and an in-plane direction in the nonwoven fabric. Fig. 3(A) is a conceptual diagram of the nonwoven fabric of the present invention, and Fig. 3(B) is conceptual diagram of a nonwoven fabric in which the pore diameter distributions of the surface layer and the back surface layer are reversed with respect to the nonwoven fabric of the present invention.

Fig. 4(A) is a schematic diagram showing a state in which a coating solution for membrane formation penetrates into the nonwoven fabric shown in Fig. 3(A). Fig. 4(B) is a schematic diagram showing a state in which a coating solution for membrane formation penetrates into the nonwoven fabric shown in Fig. 3(B).

Fig. 5 is a schematic diagram showing an example of a process of producing the nonwoven fabric of the present invention.

Fig. 6 is an optical microscope image of a sample obtained by tearing a nonwoven fabric produced in Example 1 in a longitudinal direction (MD) in liquid nitrogen to break.

Fig. 7 is an X-ray CT scan image of the nonwoven fabric prepared in Example 1. Fig. 7(a) is an overall image (perspective image), and Fig. 7(b) is a cross-sectional image.

Fig. 8 is an SEM image of the nonwoven fabric prepared in Example 1. Fig. 8(a) is a surface on a side of a fine fiber mixture portion, Fig. 8(b) is a surface on a side of a thick fiber portion, Fig. 8(c) is a cross section, Fig. 8(d) is a cross section of a sample subjected to tensile fracture, and Fig. 8(e) is a cross section of a sample obtained by further stretching the sample of Fig. 8(d).

Fig. 9 is an X-ray CT scan image of the nonwoven fabric prepared in Example 1. Fig. 9(a) is an image at a depth of 1/3 from a surface on a surface layer side, and Fig. 9(b) is an image at a depth of 2/3 from the surface on the surface layer side (depth of 1/3 from a surface on a back surface layer side).

Fig. 10 is a diagram showing a result of analyzing positions of fine fibers from an X-ray CT scan image of a nonwoven fabric prepared in Example 1. Fig. 10(a) is a diagram for explaining a procedure for analyzing positions of fine fibers from a cross-sectional image, and Fig. 10((b) shows a graph indicating a distribution of 238 analyzed fine fibers.

Fig. 11 is a graph obtained by plotting a ratio of the surface layer (a ratio of a thickness of the surface layer to a thickness of the entire nonwoven fabric) and a value of the average pore diameter in the nonwoven fabric prepared in Examples 1 to 3.

Fig. 12 shows SEM images of 6 kinds of ultrafiltration membranes prepared in Example 4. Fig. 12(a) is an SEM image of ultrafiltration membranes (4-1-1), Fig. 12(b) is an SEM image of an ultrafiltration membrane (4-1-2), Fig. 12(c) is an SEM image of an ultrafiltration membrane (4-2-1), Fig. 12(d) is an SEM image of an ultrafiltration membrane (4-2-2), Fig. 12(e) is an SEM image of an ultrafiltration membrane (4-3-1), and Fig.12(f) is an SEM image of an ultrafiltration membrane (4-3-2).

Fig. 13 is an SEM image of a surface of an ultrafiltration membrane (5-3-1) prepared in Example 5.

Fig. 14 is a schematic diagram showing sampling positions of 12 test pieces used for performance evaluation of an ultrafiltration membrane (5-3-1) prepared in Example 5.

Figs. 15(A) to (C) are schematic diagrams showing an apparatus configuration of a suction filtration test using nonwoven fabrics subjected to a water repellent treatment, prepared in Example 6 and Comparative Example 1.

Description of Embodiments

Conventionally, a part of a nonwoven fabric has been densified in order to prevent bleed-through of a coating solution. The dense layer crushed by thermal compression or the like applied in the process of producing the nonwoven fabric can delay the penetration rate of the coating solution into the nonwoven fabric. This makes the formation of a barrier layer a design guideline for nonwoven fabrics.

On the other hand, in the present invention, a concept of nonwoven fabric design is not necessarily to form a layer having a high density, but to form a layer having a large Laplace force when impregnated with a coating solution. It is not always necessary to form a dense layer or a layer having a high density.

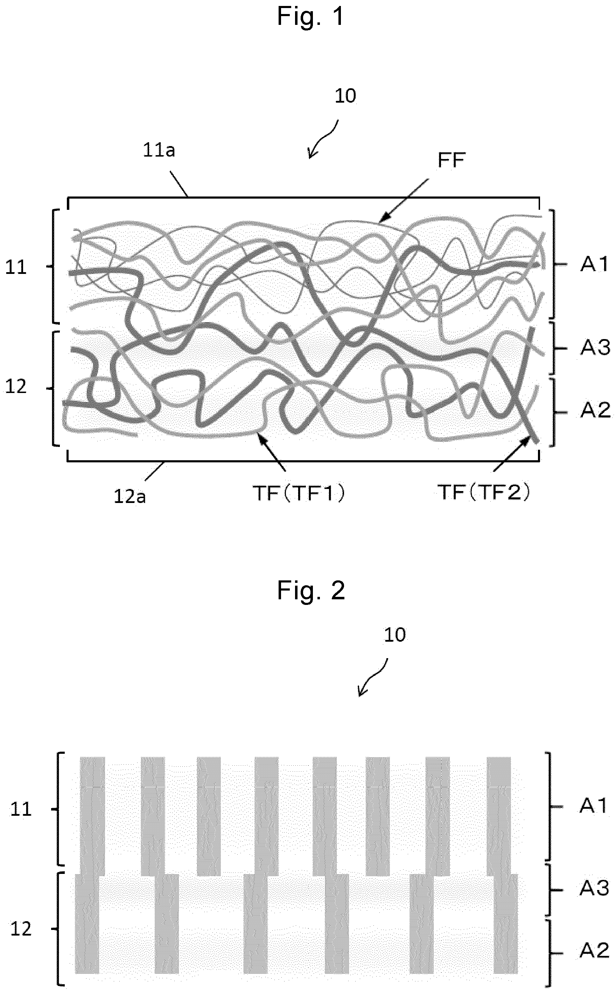

First, a schematic conceptual diagram of the structure of a nonwoven fabric of the present invention is shown in Fig. 1. A nonwoven fabric (nonwoven fabric for a separation membrane) 10 of the present invention has a surface layer 11 and a back surface layer 12, wherein, when the nonwoven fabric 10 is impregnated with a coating solution for membrane formation, the surface layer 11 has a large Laplace force and the back surface layer 12 has a small Laplace force. In the nonwoven fabric 10, a coating surface of the coating solution during film formation is the surface 11a of the surface layer 11. However, this does not deny the production of the separation membrane using the surface 12a of the back surface layer 12 as a coating surface, and does not mean that the separation membrane cannot be produced in this way. Furthermore, Fig. 1 shows an example in which the nonwoven fabric 10 has a two-layer structure of the surface layer 11 and the back surface layer 12 for the sake of clarity, but the nonwoven fabric for a separation membrane of the present invention may have a multilayer structure of more than two layers. When the nonwoven fabric has a multilayer structure of three or more layers, the nonwoven fabric has one or more optional intermediate layers (not shown) between the surface layer and the back surface layer.

The surface layer 11 includes one or more kinds of fine fibers FF having a small fiber diameter and one or more kinds of thick fibers TF having a larger fiber diameter than the fine fibers FF. The back surface layer 12 includes a portion substantially composed of only thick fibers TF. When the nonwoven fabric has the optional intermediate layer, the intermediate layer is configured to include a portion substantially composed only of thick fibers.

In other words, in the nonwoven fabric 10, the fine fibers FF are mixed in the surface layer 11, and the thick fibers TF are present on the entire surface layer 11 and the entire back surface layer 12. In particular, there are not layers having different densities, and the density distribution may be uniform. The fine fibers FF are not necessarily fibers having the same diameter, and a plurality of fine fibers having different diameters may be mixed. Further, the thick fibers TF do not have to have the same diameter, and thick fibers having a plurality of different diameters may be mixed. Fig. 1 shows, as an example, an example in which one kind of fine fibers FF is used, and two kinds of fibers TF1 and TF2 having different fiber diameters are used as thick fibers TF.

In the nonwoven fabric 10 of the present invention, the surface layer 11 includes a portion (hereinafter, fine fiber mixture portion) A1 in which fine fibers FF are mixed, and the back surface layer 12 includes a portion (Hereinafter, it is also referred to as a thick fiber portion.) A2 substantially composed only of thick fibers TF. There is no clear boundary between the fine fiber mixture portion A1 and the thick fiber portion A2, and mainly the thick fibers TF are continuously entangled. In order to schematically show this, in the conceptual diagram of Fig. 1, a portion (Hereinafter, the entangled portions may be referred to as entangled portions for the sake of convenience.) between the fine fiber mixture portion A1 and the thick fiber portion A2 is denoted by reference numeral A3, but the entangled portions A3 are characterized in that a clear boundary is not observed by X-ray CT scan, scanning electron microscope (SEM) observation, or optical microscope observation of the nonwoven fabric 10. The entanglement of the fibers between the fine fiber mixture portion A1 and the thick fiber portion A2 is mainly the entanglement of the thick fibers TF, thereby imparting dynamic strength to the nonwoven fabric 10. Therefore, the nonwoven fabric 10 is excellent in tensile strength, and delamination hardly occurs. Furthermore, in the thick fiber portion A2 of the back surface layer 12, unavoidable contamination of the fine fibers FF due to the producing process of the nonwoven fabric 10 and the like may be observed, but such contamination of the fine fibers can be substantially ignored and does not affect the performance of the nonwoven fabric 10. In other words, in the nonwoven fabric 10 of the present invention, the fine fibers FF are substantially absent in the thick fiber portion A2.

That is, in the nonwoven fabric 10 of the present invention, there is no large difference in the degree of entanglement of the thick fibers TF constituting the nonwoven fabric between the surface layer 11 and the back surface layer 12 and the intermediate portion thereof, and when viewed as the entire nonwoven fabric 10, the fine fibers FF are simply mixed in the surface layer 11.

The fine fiber FF referred to in the present invention is a fiber having a fiber diameter in the range of 0.01 dtex or more and 0.5 dtex or less. The thick fiber TF referred to in the present invention is a fiber having a fiber diameter in the range of more than 0.5 dtex and 10 dtex or less. The fiber diameter of the thick fibers TF is preferably in a range of more than 0.5 dtex and 6.5 dtex or less, more preferably in a range of more than 0.5 dtex and 5.0 dtex or less, and still more preferably in a range of more than 0.5 dtex and 3.5 dtex or less. When the fiber diameter of the thick fibers TF is within a narrower range, it

8

is easy to control the average pore diameter of the surface layer 11 of the nonwoven fabric 10 and the back surface layer 12 (or optional intermediate layer) located thereunder, and it is easy to obtain a difference in Laplace force between the surface layer 11 and the back surface layer 12 when impregnated with a coating solution and/or a difference in average pore diameter between the surface layer 11 and the back surface layer 12 (or optional intermediate layer).

The fiber lengths of the fine fibers FF and the thick fibers TF are preferably in the range of 1 to 10 mm. When the fiber lengths of the fine fibers FF and the thick fibers TF constituting the nonwoven fabric 10 are within this range, an intended effect is easily obtained, and it is also advantageous in terms of producing cost of the nonwoven fabric 10.

The total thickness of the nonwoven fabric 10 is in the range of 30 to 300 $\mu$m, more preferably in the range of 60 to 200 $\mu$m, and still more preferably in the range of 80 to 140 $\mu$m. The nonwoven fabric 10 of the present invention satisfying such a thickness range is suitable as a nonwoven fabric substrate for a separation membrane, and is excellent in handleability.

Furthermore, it is preferable that the fine fibers FF are mixed in the surface layer 11 at a ratio of 1 to 50 wt%, and the thickness of the surface layer 11 is in a range of 10 to 90% of the total thickness of the nonwoven fabric 10. More preferably, fine fibers FF are mixed in the surface layer 11 at a ratio of 5 to 20 wt%, and the thickness of the surface layer 11 is preferably in a range of 50 to 80% of the total thickness of the nonwoven fabric 10. In other words, in the nonwoven fabric 10, the composition ratio (ratio of the thickness of the surface layer 11 to the thickness of the back surface layer 12) in the thickness direction (the vertical direction of the paper surface of Fig. 1) of the surface layer 11 and the back surface layer 12 is preferably 1:9 to 9:1, and more preferably 5:5 to 8:2. When the nonwoven fabric includes an optional intermediate layer, the ratio of the thickness of the surface layer to the thicknesses of the back surface layer and the intermediate layer is preferably 1:9 to 9:1, and more preferably 5:5 ~ 8:2.

Here, the composition ratio in the thickness direction of the surface layer 11 and the back surface layer 12 in the nonwoven fabric 10 may be calculated on the basis of X-ray CT scan, scanning electron microscope (SEM) observation, or optical microscope observation of the nonwoven fabric 10. When the production conditions of the nonwoven fabric 10 are known, the composition ratio in the thickness direction of the surface layer 11 and the back surface layer 12 may be estimated using the production conditions. For example, when the nonwoven fabric has a two-layer structure of a surface layer and a back surface layer made of the same material and is produced by sequentially performing papermaking using a wet papermaking method as in Examples described later, if the basis weights of the surface layer and the back surface layer in the papermaking step are Xg/m$^2$ and Yg/m$^2$, respectively, the composition ratio of the surface layer and the back surface layer in the thickness direction in the nonwoven fabric can be estimated to be X:Y. However, in a case where the materials of the surface layer and the back surface layer are different, the degree of compression applied to the surface layer and the back surface layer in the producing process is different, and thus it may not be easy to estimate the thicknesses of the surface layer and the back surface layer as described above. In such a case, it is preferable to estimate the thicknesses of the surface layer and the back surface layer by evaluating the distribution of the fine fibers from the X-ray CT scan image.

As the material of the nonwoven fabric 10, fibers such as polyester-based fibers such as polyethylene terephthalate (PET), polybutylene terephthalate and polytrimethylene terephthalate, polyamide-based fibers such as nylon 6, nylon 66, nylon 610 and nylon 612, polyolefin-based fibers such as polypropylene (PP), polyethylene (PE) and a composite material of polypropylene and polyethylene (PP/PE), engineering plastic fibers such as polyphenylene sulfide (PPS), natural pulp and rayon fibers, and copolymers or mixtures mainly containing these resins are preferably used. Among them, polyester-based fibers are preferably used because they have high strength and dimensional stability. Furthermore, the material of the surface layer 11 and the material of the back surface layer 12 may be the same or different. The same applies when the nonwoven fabric includes an optional intermediate layer.

Fig. 2 shows conceptual diagrams of pore diameters in the surface layer 11 and the back surface layer 12 of the nonwoven fabric 10 of the present invention. As described above, in the nonwoven fabric 10 of the present invention, since fine fibers are mixed in the surface layer 11, the degree of entanglement and the density of the fibers constituting the nonwoven fabric 10 do not greatly change as a whole (macroscopically), and the pore diameter is partially different (microscopically), and the pore diameter in the surface layer 11 is smaller than that in the back surface layer 12. Note that, in Fig. 2, for the sake of clarity, spaces between gray rectangles extending in the thickness direction mean pores, and a state is schematically shown in which a pore diameter is small in a portion where fine fibers are mixed in the surface layer 11 (That is, the fine fiber mixture portion A1), and a pore diameter is larger than that of the fine fiber mixture portion A1 by a configuration including substantially only thick fibers in the thick fiber portion A2 of the back surface layer 12. In the entangled portion A3 between the fine fiber mixture portion A1 and the thick fiber portion A2, mainly the thick fibers TF are continuously entangled, so that the pore diameter is relatively large as in the thick fiber portion A2. Although the difference in pore diameter is clearly shown in Fig. 2, in this case, the pore diameter may be slightly smaller in the fine fiber mixture portion A1 of the surface layer 11 than in the thick fiber portion A2 of the back surface layer 12, and a difference in pore diameter between the surface layer 11 and the back surface layer 12 of 5 to 15% is sufficient. When the pore size of the surface layer 11 is significantly reduced with respect to the back surface layer 12, porositization of the resin solution due to non-solvent induced phase separation may be inhibited.

Now, the flow of the resin solution in the pores of the nonwoven fabric having the structure as schematically shown in Fig. 2 will be described. The flow of the resin solution in one pore should be considered as a Hazen-Poiseuille flow. The flow rate in the pores is proportional to the fourth power of the pore radius (R), proportional to the pressure difference ($\Delta$P), and inversely proportional to the viscosity ($\rho$) and the length (L) of the channel. However, considering the flow rate (flux) per unit area, it is proportional to the square of the pore radius (R).

Here, the driving force with which the resin solution penetrates into the nonwoven fabric is capillary pressure ($\Delta$P). The capillary pressure is inversely proportional to the pore radius. That is, as the pore radius decreases, the capillary pressure as the driving force increases in inverse proportion. Therefore, the flux per unit area with the capillary pressure as the driving force is proportional to the pore radius (R), and the arrival time to the back surface is inversely proportional to the pore radius (R). In the case of a porous body such as a nonwoven fabric, pores are bent in various ways, and various models considering tortuosity are considered (See, e.g., R. Kondo, M. Daimon, S. Ohsawa, Gypsum & Lime, No. 112, 14, 1971.).

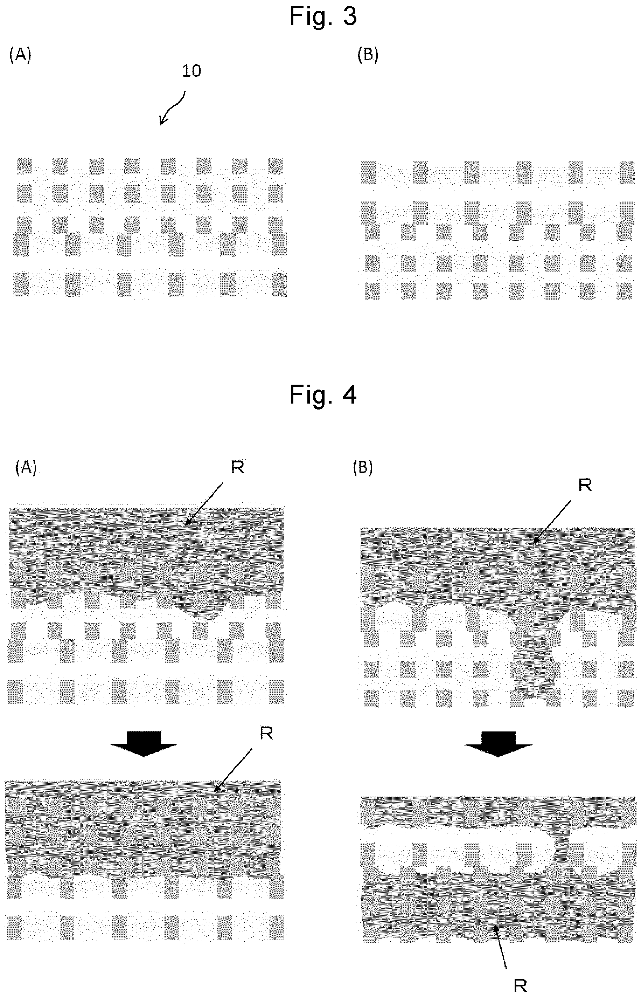

In an actual nonwoven fabric, not only a simple flow path in the thickness direction as in the schematic diagram of Fig. 2 but also various gaps exist between fibers, and the resin solution penetrates into the gaps. A major feature of an actual nonwoven fabric is that fibers are stacked in a plane of a sheet, and a flow path is also formed in a lateral direction (in-plane direction). This is added to the schematic diagram of Fig. 2 as shown in Fig. 3. Here, Fig. 3(A) is a conceptual diagram of a nonwoven fabric 10 of the present invention, and Fig. 3(B) is a conceptual diagram of a nonwoven fabric in which pore diameter distributions of a surface layer and a back surface layer are reversed with respect to the nonwoven fabric of the present invention, that is, a nonwoven fabric in which fine fibers are mixed in the back surface layer. In Figs. 3(A) and 3(B), the pores in the lateral direction (in-plane direction) are shown to be slightly smaller than the pores in the longitudinal direction (thickness direction) for the sake of clarity, but also in the nonwoven fabric produced in Examples described later, it is confirmed from a scanning electron microscope (SEM) image or an X-ray CT scan image that the pores in the lateral direction are slightly smaller than the pores in the longitudinal direction. Here, in the nonwoven fabric 10 shown in Fig. 3(A), the surface of the layer (surface layer) located on the upper side is the coating surface of the coating solution, and is a surface having a large Laplace force.

The Laplace force may be considered as a pressure difference defined by the Young Laplace equation (Formula 1), and is synonymous with capillary pressure of capillary phenomenon.

$$\Delta P = 2\gamma/R \text{ (Formula 1)}$$

This Laplace force is very large in pores of about 5 $\mu$m formed in the nonwoven fabric. For example, N-methylpyrrolidone (NMP) often used as a solvent of a resin solution has a large surface tension ($\gamma$) of 41 mN/m at 25°C. In the Young Laplace equation (Formula 1), the capillary pressure (Laplace force) is obtained from the surface tension ($\gamma$) and the pore radius (R).

Introducing the above surface tension and 5 $\mu$m pore size (2.5 $\mu$m pore radius) into Equation 1, the pressure difference ($\Delta$P) becomes $32.8 \times 10^6$ mN/m, which is equivalent to 32.8 kPa. For a pore size of 5.5 $\mu$m, the pressure difference ($\Delta$P) is 29.8 kPa. The difference between vacuum and atmospheric pressure is 100 kPa, and the differential pressure of capillary forces in pores of 5 $\mu$m and 5.5 $\mu$m (3 kPa) reaches 3% of this difference. That is, as described above, when the surface layer 11 is in a state where the pore diameter is slightly smaller than that of the back surface layer 12 (in this case, 0.5 $\mu$m), it can be seen that a significant difference occurs in Laplace force between the surface layer 11 and the back surface layer 12.

The average pore diameter of the nonwoven fabric 10 of the present invention is desirably 20 $\mu$m or less, and more desirably 10 $\mu$m or less. Furthermore, it is desirable that the surface layer 11 has an average pore diameter smaller than that of the back surface layer 12 (in the case of having an optional intermediate layer, the intermediate layer) located thereunder, the difference between the average pore diameter of the surface layer 11 and the average pore diameter of the back surface layer 12 (or the optional intermediate layer) is 0.5 $\mu$m or more, and it is more desirable that the difference between the average pore diameters is 1.0 $\mu$m or more. In the nonwoven fabric 10 of the present invention having such a difference in average pore diameter between the surface layer 11 and the back surface layer 12 (or an optional intermediate layer), a difference in Laplace force between the surface layer 11 and the back surface 12 (or an optional intermediate layer) is more reliably generated, which is suitable as a nonwoven fabric substrate for a separation membrane. Since the Laplace force is determined not only by the average pore diameter of the nonwoven fabric (layer constituting the nonwoven fabric) but also by the surface tension of the solvent of the resin solution, theoretically, the difference in average pore diameter between the surface layer 11 and the back surface layer 12 (or optional intermediate layer) may be smaller than 0.5 $\mu$m as the surface tension of the solvent of the resin solution increases, but in the present invention, the difference in average pore diameter is preferably 0.5 $\mu$m or more in view of the flow of the resin solution in the pores of the nonwoven fabric described with reference to Figs. 2 and 3 and the use as a nonwoven fabric substrate for a separation membrane.

Even when the composition ratio in the thickness direction of the surface layer 11 and the back surface layer 12 in the nonwoven fabric 10 can be calculated or estimated as described above, it is practically difficult to measure the average pore diameters of the surface layer 11 and the back surface layer 12 and calculate the difference between the average pore diameters for two-layer or multi-layer porous bodies having a thickness in the order of micrometers like the nonwoven fabric 10 by the analysis technique at the time of filing of the present application. However, when the production conditions of the target porous body (nonwoven fabric in the case of the present application) are known and a plurality of (preferably three or more) test bodies can be prepared, it is possible to estimate the difference in average pore diameter between the surface layer and the back surface layer as in Examples described later. As a method of measuring the average pore diameter, a palm porometer is generally used, and a bubble point method or a mercury intrusion method can be used. In the case of a nonwoven fabric, in particular, a bubble point method is suitably used, whereby it can also be effective to provide a test condition under which it can be confirmed that the difference in average pore diameter between the surface layer and the back surface layer is 0.5 μm or more.

Figs. 4(A) and 4(B) schematically show a state in which the resin solution (coating solution for film formation) R penetrates into the nonwoven fabric shown in Figs. 3(A) and 3(B), respectively. In Figs. 4(A) and 4(B), the upper part shows a state immediately after the resin solution R is applied, and the lower part shows a state after a further time has elapsed. As shown in Fig. 4(A), when the pore size of the surface layer is smaller than that of the back surface layer (That is, in the case of the nonwoven fabric 10 of the present invention,), the resin solution R slowly penetrates into the surface layer. However, the pores in the nonwoven fabric are not necessarily homogeneous, and the penetration of the resin solution R also fluctuates (the upper part of Fig. 4(A)). However, since the driving force of the Hagen-Poiseuille flow is capillary force and the resin solution R tends to flow to the side having a smaller pore diameter, the resin first infiltrates into the surface layer, and after the small pores are filled, the resin solution R infiltrates into the back surface layer. Furthermore, the flow of the resin solution R in the small pores is slow, and it takes a considerable time for the resin solution R to reach the lower surface of the back surface layer (the lower part of Fig. 4(A)).

On the other hand, as shown in Fig. 4(B), when the pore size of the surface layer is larger than that of the back surface layer, the initial penetration rate of the resin solution R is high. Furthermore, fluctuation of the immersion speed of the resin solution R is also large, and a part thereof reaches the back surface layer (the upper part of Fig. 4(B)). When the resin solution R reaches the back surface layer having a large capillary force, the back surface layer absorbs the resin solution R on the surface layer, so that the penetration of the resin solution R proceeds at once (the lower part of Fig. 4(B)).

For this reason, the nonwoven fabric 10 of the present invention in which the fine fibers FF are mixed in the surface layer 11 can delay the penetration of the resin solution R. As described above, the magnitude of the Laplace force is related to the surface tension of the solvent of the resin solution (coating solution for film formation), and the material of the nonwoven fabric needs to have a certain degree of wettability for expression of the Laplace force. Therefore, the nonwoven fabric 10 of the present invention may be subjected to a surface treatment for controlling the wettability of the nonwoven fabric. Examples of such a surface treatment include a hydrophilization treatment (plasma treatment or the like), and the surface treatment is typically applied to the surface layer 11 of the nonwoven fabric 10, but may also be applied to the back surface layer 12.

Nonwoven fabric 10 for a separation membrane shown in Fig. 1 may be a wet nonwoven fabric or a dry nonwoven fabric (spunbond method, meltblow method, thermal bond method, chemical bond method, needle punch method, spunlace method, stitch bond method, steam jet method). However, when the smoothness of the surface of the nonwoven fabric is required, a wet nonwoven fabric is preferable. Further preferably, there is no bonding step, and a "papermaking method" which is excellent in terms of cost, production efficiency, and adhesive strength between layers, and in which a multilayer structure having different Laplace forces is obtained in one papermaking step is preferable.

As described above, the method of producing the nonwoven fabric 10 for a separation membrane of the present invention includes sequentially papermaking a fiber dispersion liquid for the surface layer 11 including fine fibers FF having a small fiber diameter and one or more kinds of thick fibers TF having a fiber diameter larger than that of the fine fibers FF, al fiber dispersion liquid for an optional intermediate layer including only the thick fibers TF, and a fiber dispersion liquid for the back surface layer 12 including only the thick fibers TF using a wet papermaking method.

The fine fibers FF and the thick fibers TF used in the method of producing the nonwoven fabric 10 of the present invention are as described above for the nonwoven fabric 10, and thus the detailed description thereof will be omitted.

More specifically, in the method of producing the nonwoven fabric 10 of the present invention, the fiber dispersion liquid for the surface layer 11 is obtained by dispersing 1 to 50 wt% of fine fibers FF having a fiber diameter in a range of 0.01 dtex or more and 0.5 dtex or less and 50 to 99 wt% of thick fibers TF having a fiber diameter in a range of more than 0.5 dtex and 10 dtex or less in water, and the fiber dispersion liquid for the back surface layer 12 and the fiber dispersion liquid for an optional intermediate layer are preferably obtained by dispersing 100 wt% of thick fibers TF having a fiber diameter in a range of more than 0.5 dtex and 10 dtex or less in water. By sequentially performing papermaking using such a fiber dispersion using a wet papermaking method, it is possible to efficiently obtain the nonwoven fabric 10 having the surface layer 11 and the back surface layer 12 (and optional intermediate layer), wherein, when the nonwoven fabric 10 is impregnated with a coating solution, the surface layer 11 has a large Laplace force and the back surface layer 12 (and the optional intermediate layer) has a small Laplace force. Furthermore, it is possible to more reliably obtain the nonwoven fabric 10 having a structure in which the average pore diameter of the surface layer 11 is smaller than the average pore diameter of the back surface layer 12 (or optional intermediate layer) by 0.5 μm or more.

Furthermore, when the fiber dispersion liquid for the surface layer 11 is obtained by dispersing 5 to 50 wt% of the fine fibers FF having a fiber diameter in a range of 0.05 dtex or more and 0.5 dtex or less and 50 to 95 wt% of the thick fibers TF having a fiber diameter in a range of more than 0.5 dtex and 3.5 dtex or less in water, and the fiber dispersion liquid for the back surface layer 12 and the fiber dispersion liquid for an optional intermediate layer are obtained by dispersing 100 wt% of the thick fibers TF having a fiber diameter in a range of more than 0.5 dtex and 3.5 dtex or less in water, the nonwoven fabric 10 having the surface layer 11 and the back surface layer 12 (and the optional intermediate layer), wherein, when the nonwoven fabric 10 is impregnated with the coating solution, the surface layer 11 has a large Laplace force and the back surface layer 12 (and the optional intermediate layer) has a small Laplace force, can be more reliably obtained, which is preferable. Furthermore, the nonwoven fabric 10 having a structure in which the average pore diameter of the surface layer 11 is smaller than the average pore diameter of the back surface layer 12 (or optional intermediate layer) by 0.5 μm or more can be more reliably obtained.

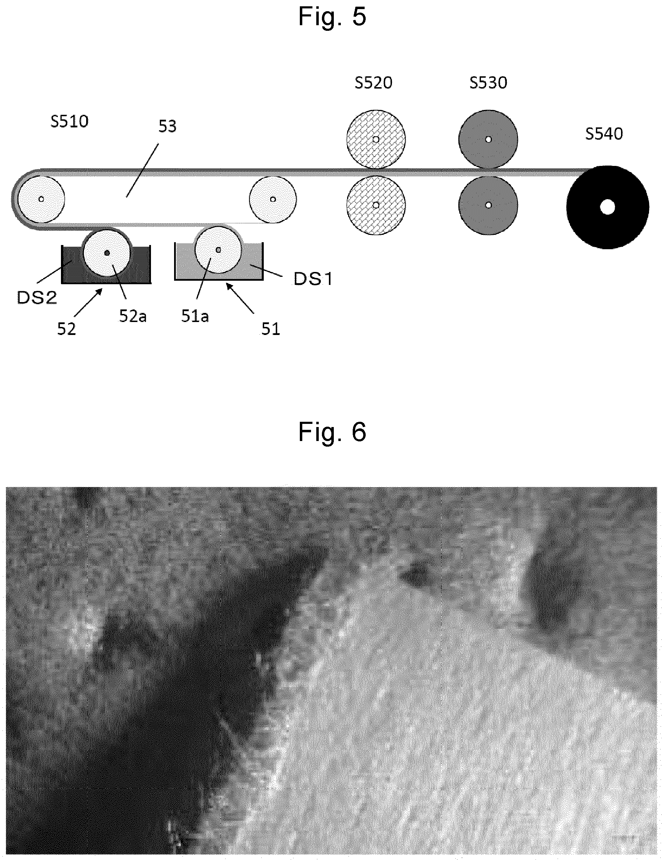

Fig. 5 schematically shows an example of a process for producing the nonwoven fabric of the present invention as a flow. As shown in Fig. 5, in one aspect of the apparatus for producing a nonwoven fabric of the present invention, two cylinder paper machines (a first cylinder paper machine 51 and a second cylinder paper machine 52) are connected, a fiber dispersion DS1 for a surface layer including one or more kinds of fine fibers having a small fiber diameter and one or more kinds of thick fibers having a larger fiber diameter than the fine fibers is accommodated in the first cylinder paper machine 51, and a fiber dispersion DS2 for a back surface layer including only the thick fibers is accommodated in the second cylinder paper machine 52.

In the aspect shown in Fig. 5, first, in the paper making step (S510), the fiber dispersion DS1 stored in the first cylinder paper machine 51 is scooped by the roll 51a by the wire conveyor 53 to make a paper sheet having a surface layer, and then the fiber dispersion DS2 stored in the second cylinder paper machine 52 is scooped by the roll 52a by the wire conveyor 53 to make a paper sheet having a back surface layer. Thus, after the surface layer and the back surface layer are superimposed in a wet paper state, the nonwoven fabric is subjected to a dehydration step (S520). As a device configuration for performing the dehydration step, a conventionally known device can be applied. For example, in a Yankee dryer, a nonwoven fabric is usually wound around a heated drum, and dried and compressed to form a sheet. Next, the nonwoven fabric is subjected to a heat treatment step (S530). As a device configuration for performing the heat treatment step, a conventionally known device can be applied. For example, in a calendering device, the nonwoven fabric is heated and compressed at a predetermined temperature. Thereafter, the nonwoven fabric is subjected to a winding step (S540) to obtain a target nonwoven fabric.

It should be noted that the device configuration schematically shown in Fig. 5 is an example, and does not necessarily coincide with an actual producing device. For example, the structure and arrangement of the first cylinder paper machine 51 and the second cylinder paper machine 52 can be changed. For example, the fiber dispersion liquid DS2 for the back surface layer may be accommodated in the first cylinder paper machine 51, and the fiber dispersion liquid DS1 for the surface layer may be accommodated in the second cylinder paper machine 52. Further, a third or more cylinder paper machines may be added between the first cylinder paper machine 51 and the second cylinder paper machine 52, and a fiber dispersion liquid for the optional intermediate layer may be accommodated to produce a nonwoven fabric having a multilayer structure of three or more layers. Furthermore, in a circular net paper machine, it is common to cause a wire conveyor to scoop fibers using many rolls, but in Fig. 5, this is simplified and represented by one roll. The apparatus configuration for performing the dehydration step S520, the heat treatment step S530, and the winding step S540 is similarly simplified.

As shown in Fig. 5, when a plurality of cylinder paper machines are connected, fiber dispersions of different kinds of raw materials and/or different compositions can be sequentially made into paper. Furthermore, the fibers used for papermaking in each cylinder paper machine are continuously entangled with each other and sent to a dehydration step, and then subjected to a heat treatment step. The nonwoven fabric formed in this way has high tensile strength and is less likely to cause delamination. As a result, high adhesiveness with the coating film required for backwashing or the like is realized. A nonwoven fabric having a surface layer having a large Laplace force and a back surface layer having a small Laplace force can be produced even as a dry nonwoven fabric, but a method of connecting a plurality of cylinder paper machines as shown in Fig. 5 is preferable because a nonwoven fabric of higher quality can be produced. Note that the paper machine is not limited to the circular mesh type, and a rectangular mesh type may be used.

Examples of the present invention will be described below, but the present invention is not limited to the scope of the following Examples.

Examples

[Example 1]

As schematically shown in Fig. 5, a nonwoven fabric was produced using a production apparatus in which two cylinder paper machines were connected. Using PET shortcut fibers each having a fiber length of 3 to 5 mm, a fiber dispersion liquid containing 10 wt% of drawn fibers 0.1 dtex, 30 wt% of drawn fibers 0.6 dtex, and 60 wt% of drawn fibers 1.2 dtex was placed in a first cylinder paper machine, a fiber dispersion liquid containing 40 wt% of drawn fibers 0.6 dtex and 60 wt% of drawn fibers 1.2 dtex was placed in a second cylinder paper machine, fibers were scooped by a wire conveyor from the first cylinder paper machine at a basis weight of 40 g/m$^2$ to make a sheet of a surface layer, fibers were then scooped by a wire conveyor from the second cylinder paper machine at a basis weight of 40 g/m$^2$ to make a sheet of a back surface layer, and the surface layer and the back surface layer were superposed on each other in a wet sheet state (papermaking step). Subsequently, drying and compression were performed at 135 °C with a Yankee dryer to form a sheet (dehydration step). Thereafter, the nonwoven fabric was heated and compressed at 260°C with a soft nip type calendering device (heat treatment step), and subjected to a winding step to obtain a nonwoven fabric of Example 1. This is referred to as a nonwoven fabric (1). Physical properties of the nonwoven fabric (1) included a basis weight of 80 g/m$^2$, a thickness of 115 $\mu$m, a density of 0.71 g/cm$^3$, a tensile strength (machine direction, MD) of 103.3 N/15 mm, a tensile strength (Lateral direction, CD: cross direction) of 67.4 N/15 mm, an air permeability of 1.84 cm$^3$/cm$^2 \cdot$ s, and an average pore diameter of 6.05 $\mu$m.

In Examples of the present invention, fibers of 0.1 dtex are referred to as fine fibers, and fibers of 0.6 dtex and 1.2 dtex are referred to as thick fibers. When it is necessary to distinguish the latter, fibers of 0.6 dtex are referred to as medium-thick fibers, and fibers of 1.2 dtex are referred to as extra-thick fibers. In the obtained nonwoven fabric, a portion where thick fibers (middle thick fibers or extra thick fibers) and fine fibers are mixed is referred to as a fine fiber mixture portion, and a portion substantially composed of thick fibers (middle thick fibers or extra thick fibers) is referred to as a thick fiber portion.

Fig. 6 shows an optical microscope image of a sample obtained by tearing the nonwoven fabric (1) in the longitudinal direction (MD) in liquid nitrogen to break the nonwoven fabric (1). Since the 3 to 5 mm PET shortcut fibers are entangled in the nonwoven fabric (1), even if the nonwoven fabric is broken in liquid nitrogen, the fibers are stretched several millimeters in the tearing direction from the fracture surface. Furthermore, since the cylinder paper machine is produced in a continuous process, no noticeable damage or the like is observed other than the broken portion, and the nonwoven fabric is maintained in an integrated state.

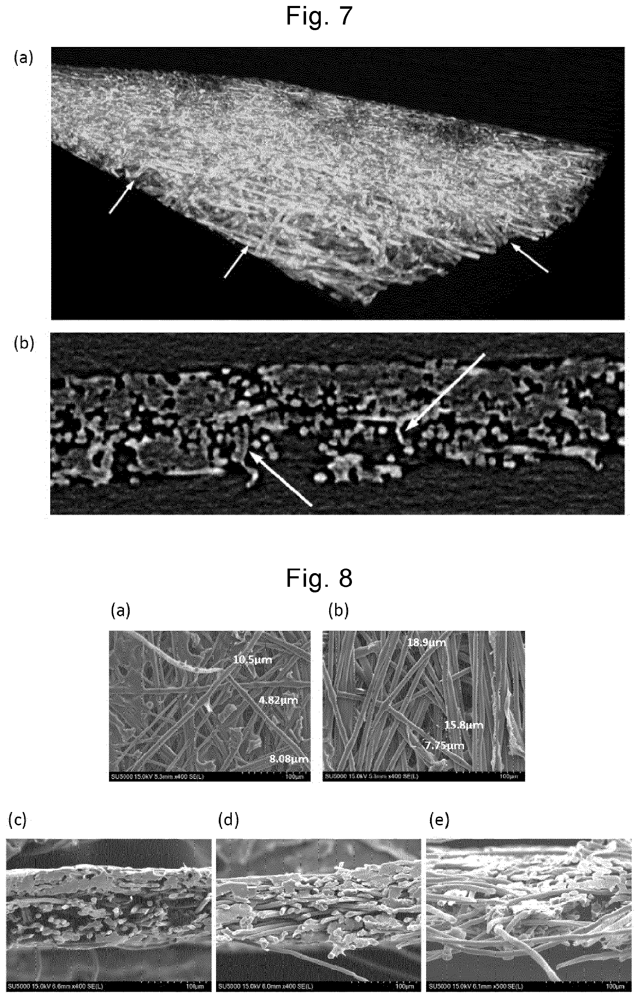

Fig. 7 shows an X-ray CT scan image of the nonwoven fabric (1). In the overall image (perspective image) of Fig. 7(a), many fine fibers are present in the upper layer (surface layer), and almost no fine fibers are present in the lower layer (back layer). The possibility that fine fibers are mixed into the back surface layer side in the production process cannot be completely denied, but it may be considered that such mixing of fine fibers can be substantially ignored and does not affect the performance of the nonwoven fabric. The fine fiber mixture portion in which fine fibers are mixed and the thick fiber portion substantially composed of thick fibers (medium thick fibers and extra-thick fibers) are integrated as a whole, and a clear boundary is not confirmed therebetween. In the overall image of Fig. 7(a), some thick fibers exist so as to bridge the fine fiber mixture portion and the thick fiber portion, and this is indicated by an arrow. Also in the cross-sectional image of Fig. 7(b), thick fibers positioned so as to bridge the fine fiber mixture portion and the thick fiber portion are indicated by arrows. In the cross-sectional image of Fig. 7(b), the cross section of the fibers is mainly confirmed, but when the cross-sectional image is continuously observed in the in-plane direction of the nonwoven fabric, it can be confirmed that many thick fibers bridge the fine fiber mixture portion and the thick fine fiber portion (image is not shown).

Figs. 8(a) to 8(e) show scanning electron microscope (SEM) images of the nonwoven fabric (1). Fig. 8(a) is an SEM image of a surface (surface of the surface layer) on the side of the fine fiber mixture portion, Fig. 8(b) is an SEM image of a surface (surface of the back surface layer) on the side of the thick fiber portion, Fig. 8(c) is an SEM image of a cross section, Fig. 8(d) is an SEM image of a cross section of a sample subjected to tensile fracture, and Fig. 8(e) is an SEM image of a cross section of a sample obtained by further stretching the sample of Fig. 8(d).

When the SEM image (cross-sectional image) of Fig. 8(c) is viewed, a part of the surface layer (upper layer) is crushed, and the density seems to be high. However, as confirmed by the X-ray CT scan image (see Fig. 7), individual fibers exist independently. Therefore, it is considered that a portion where the density is felt to be high in the SEM image of Fig. 8(c) is due to partial collapse of the shape of the fine fibers due to the pressure when the sample is cut with a knife. When the density of PET used in this example is 1.38 g/cc, the equivalent circle diameters of the fibers of 0.1 dtex, 0.6 dtex, and 1.2 dtex are 3.04 $\mu$m, 7.44 $\mu$m, and 10.05 $\mu$m, respectively. However, in the cross-sectional image of the X-ray CT scan (Fig. 7(b)), an elliptical cross section was confirmed, and in particular, in the vicinity of the upper surface and the lower surface of the nonwoven fabric, the major axis was observed to be about 1.0 to 1.9 times larger than the equivalent circle diameter for heating and compression at the time of production. That is, it is considered that the 4.82 $\mu$m fibers whose numerical values are shown in the SEM image of Fig. 8(a) are fine fibers, the 8.08 $\mu$m and 10.5 $\mu$m fibers are thick fibers (medium thick fibers), and the 7.75 $\mu$m fibers are thick fibers (medium thick fibers), and the 15.8 $\mu$m and 18.9 $\mu$m fibers are thick fibers (very thick fibers) in the SEM image of Fig. 8(b). In the SEM image of Fig. 8(a), a large number of fine fibers are observed, but in the SEM image of Fig. 8(b), fibers having a fiber diameter corresponding to the fiber diameter of the fine fibers are not observed.

In the SEM image of Fig. 8(c), the upper layer (surface layer) has many fine fibers, and some of the fibers are bonded to each other by the cutting pressure. As shown in Fig. 8(d), when the nonwoven fabric is pulled and broken and the SEM image of the cross section of the sample slightly stretched as a whole is viewed, it can be confirmed that some fibers bridge the upper layer (surface layer) and the lower layer (back layer), and this becomes clearer in the cross section of the sample further stretched as shown in Fig. 8(e).

As is clear from Figs. 6 to 8, since the nonwoven fabric (1) is not produced by bonding a plurality of layers having different structures, and is produced by sequentially papermaking from fiber dispersions having different compositions using a production apparatus in which a cylinder paper machine is connected, the nonwoven fabric (1) is integrated as a whole, and a clear boundary between the surface layer and the back surface layer is not confirmed by optical microscope observation, X-ray CT scan, or SEM observation of a cross section. Furthermore, it can be seen that fibers bridging the surface layer and the back surface layer of the nonwoven fabric exist, and entanglement occurs in a portion where the existence probability of the fine fibers decreases. When the surface layer and the back surface layer are compared, it can be seen that the average distance between the fibers of the former is short, and the average pore diameter into which the liquid (resin solution) penetrates is also small.

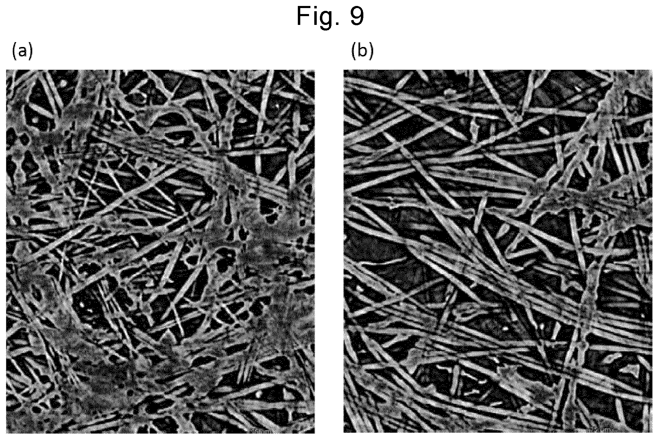

Figs. 9(a) and 9(b) show an image at a depth of 1/3 from the surface on the surface layer side and an image at a depth of 2/3 (That is, a depth of 1/3 from the surface on the back surface layer side) from the surface on the surface layer side, respectively, in the X-ray CT scan image of the nonwoven fabric (1). Many fine fibers are observed in Fig. 9(a), but few fine fibers are observed in Fig. 9(b).

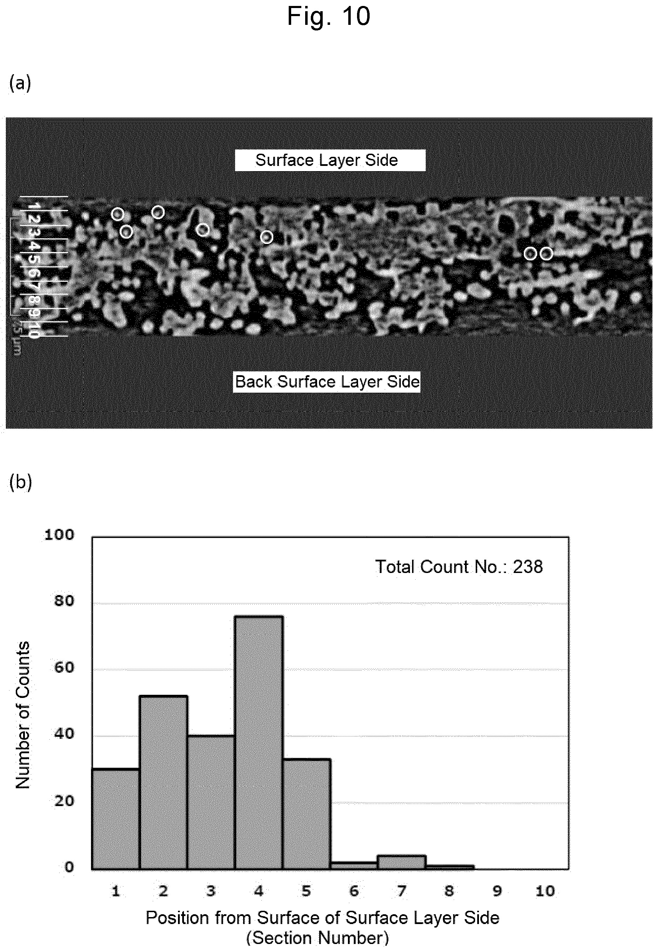

Fig. 10 shows the results of extracting 62 cross-sectional images from the X-ray CT scan image of the nonwoven fabric (1) and analyzing the positions of 238 fibers identified as fine fibers. Fig. 10(a) is an example of an extracted cross-sectional image, in which the thickness of the nonwoven fabric (1) is divided into 10, and the numbers 1 to 10 are assigned to the surface layer side to the back surface layer side, and the number of fine fibers (fibers indicated by circles) in each section is counted. Fig. 10(b) shows a graph indicating the distribution of 238 fine fibers thus obtained.

As understood from the production process described above, in the present Example, 40 $g/m^2$ layers are made into paper as a surface layer and a back surface layer, respectively, and the fiber dispersion for the back surface layer does not contain fine fibers. Therefore, as shown in Fig. 10(b), most of the fine fibers are located on the surface layer side of the nonwoven fabric (1), but some of the fine fibers are also present on the back surface layer side. However, when calculated assuming that the thicknesses of the surface layer and the back surface layer are the same (That is, the sections 1 to 5 is the surface layer, and the sections 6 to 10 is the back surface layer.), the existence probability of the fine fibers on the back surface layer side is only 2.9% ($7/238 \approx 0.029$) of the whole. The existence probability of the fine fibers on the surface layer side decreases in the vicinity of the surface on the surface layer side (section 1) and in the portion entangled with the fibers on the back surface layer side (section 5). This is considered to be because, during heating and compression at the time of manufacturing, in the section 1, the fine fibers easily get stuck inside (section 2) as compared with the thick fibers, and in the section 5, the fine fibers easily get stuck inside (section 4) by being pushed by the thick fibers of the back surface layer.

[Example 2]

A nonwoven fabric of Example 2 was obtained by the same production process as in Example 1 except that using a producing apparatus having the same configuration as in Example 1, fibers were scooped by a wire conveyor from a first net paper machine at a basis weight of 50 $g/m^2$ to make a paper sheet, and then fibers were scooped by a wire conveyor from a second net paper machine at a basis weight of 30 $g/m^2$ to make a paper sheet of a back surface layer. This is referred to as a nonwoven fabric (2). Physical properties of the nonwoven fabric (2) were a basis weight of 80 $g/m^2$, a thickness of 120 $\mu$m, a density of 0.68 $g/cm^3$, a tensile strength (MD) of 97.3 N/15 mm, a tensile strength (CD) of 63.0 N/15 mm, an air permeability of 1.85 $cm^3/cm^2 \cdot s$, and an average pore size of 5.79 $\mu$m.

[Example 3]

A nonwoven fabric of Example 3 was obtained by the same production process as in Example 1 except that using a producing apparatus having the same configuration as in Example 1, fibers were scooped by a wire conveyor from a first net paper machine at a basis weight of 60 $g/m^2$ to make a paper sheet of a surface layer, and then fibers were scooped by a wire conveyor from a second net paper machine at a basis weight of 20 $g/m^2$ to make a paper sheet of a back surface layer. This is referred to as a nonwoven fabric (3). Physical properties of the nonwoven fabric (3) included a basis weight of 80 $g/m^2$, a thickness of 126 $\mu$m, a density of 0.69 $g/cm^3$, a tensile strength (MD) of 94.5 N/15 mm, a tensile strength (CD) of 72.0 N/15 mm, an air permeability of 1.64 $cm^3/cm^2 \cdot s$, and an average pore size of 5.56 $\mu$m.

In the nonwoven fabrics (1) to (3) in Examples 1 to 3, the ratios (% by weight) of each stretched fiber in the fiber dispersion liquid in the first cylinder paper machine and the second cylinder paper machine and the ratio (% by weight) of the stretched fiber in the produced nonwoven fabric were summarized in Table 1. In the three nonwoven fabrics, the compositions of the two kinds of fiber dispersion liquids used for production are the same, but only the basis weights of the nonwoven fabrics (the surface layer and the back surface layer) transferred from the first cylinder paper machine and the second cylinder paper machine are different. Therefore, in the nonwoven fabrics (1) to (3), it can be considered that only the thicknesses of the surface layer and the back surface layer are different. Thus, the proportions (% by weight) of the fine fibers in the nonwoven fabrics (1) to (3) are 5.0%, 6.25%, and 7.5%, respectively.

[Table 1]

| Nonwoven Fabric | First Cylinder Paper Machine | | | Second Cylinder Paper Machine | | Weight Ratio of Fibers in Nonwoven Fabric |
|---|---|---|---|---|---|---|
| | Fiber Diameter (dtex) | | | Fiber Diameter (dtex) | | |
| | 0.1 | 0.6 | 1.2 | 0.6 | 1.2 | 0.1 / 0.6 / 1.2 (dtex) |
| (1) | 10% | 30% | 60% | 40% | 60% | 5.0% / 35% / 60% |
| | /40 gm $^{-2}$ | /40 gm $^{-2}$ | /40 gm $^{-2}$ | /40 gm $^{-2}$ | /40 gm $^{-2}$ | |
| (2) | 10% | 30% | 60% | 40% | 60% | 6.25% / 33.75% / 60% |
| | /50 gm $^{-2}$ | /50 gm $^{-2}$ | /50 gm $^{-2}$ | /30 gm $^{-2}$ | /30 gm $^{-2}$ | |
| (3) | 10% | 30% | 60% | 40% | 60% | 7.5% / 32.5% / 60% |
| | /60 gm $^{-2}$ | /60 gm $^{-2}$ | /60 gm $^{-2}$ | /20 gm $^{-2}$ | /20 gm $^{-2}$ | |

Table 2 summarizes the physical properties of nonwoven fabrics (1) to (3) in Examples 1 to 3. Compared with the nonwoven fabric (1), the nonwoven fabric (3) has a thickness increased by about 10%. The reason why the fine fibers are less likely to be crushed in the heat treatment step (heating/compression process) even though the ratio of the thick fibers (More specifically, medium thick fibers) is reduced as compared with the fine fibers may be that the fine fibers slightly inhibit thermal compression of the thick fibers. However, in the nonwoven fabrics (1) to (3), since the amount of change in density is small, there is a high possibility that the influence of the surface roughness affects the thickness measurement. On the other hand, the average pore size of the nonwoven fabric (3) is about 10% smaller than that of the nonwoven fabric (1), and the average pore size of the thick nonwoven fabric (3) is the smallest, so that the contribution of fine fibers can be clearly seen.

[Table 2]

| Nonwoven Fabric | Basis Weight (g/m$^2$) | Thickness ($\mu$m) | Density (g/cm$^3$) | Tensile Strength | (N/15mm) | Air Permeability (cm $^3$/cm $^2$s) | Average Pore Diameter ($\mu$m) |
|---|---|---|---|---|---|---|---|
| | | | | Longitudinal (MD) | Cross (CD) | | |
| (1) | 80 | 115 | 0.71 | 103.3 | 67.4 | 1.84 | 6.05 |
| (2) | 80 | 120 | 0.68 | 97.3 | 63.0 | 1.85 | 5.79 |
| (3) | 80 | 126 | 0.69 | 94.5 | 72.0 | 1.64 | 5.56 |

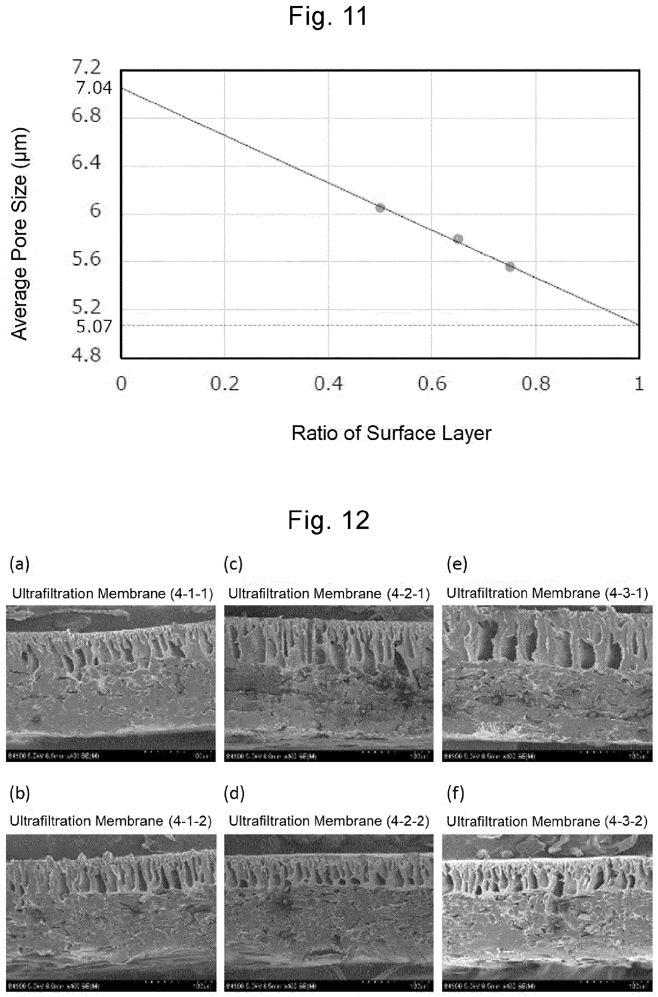

Fig. 11 shows graphs obtained by plotting the ratio of the surface layer (the ratio of the thickness of the surface layer to the thickness of the entire nonwoven fabric) and the value of the average pore diameter in the nonwoven fabrics (1) to (3). As shown in Fig. 11, a linear approximation straight line (regression straight line) is obtained from plots of three points corresponding to the nonwoven fabrics (1) to (3), and it is estimated that the average pore diameter is 5.07 $\mu$m for a nonwoven fabric having a surface layer ratio of 1 (That is, it was prepared from only the fiber dispersion liquid for the surface layer.) and the average pore diameter is 7.04 $\mu$m for a nonwoven fabric having a surface layer ratio of 0 (That is, it was prepared from only the fiber dispersion liquid for the back surface layer.). Therefore, in the nonwoven fabrics (1) to (3) prepared in Examples 1 to 3, it could be estimated that the difference in average pore diameter between the surface layer and the back surface layer was 1.97 $\mu$m, and it was confirmed that the nonwoven fabric in which the average pore diameter was smaller by 0.5 $\mu$m or more than that of the back surface layer under the surface layer was obtained by the method of producing a nonwoven fabric of the present invention.

[Example 4]

Each of the nonwoven fabrics (1) to (3) prepared in Examples 1 to 3 was cut to A4 size, and polyethersulfone (PES) was applied to one surface (Surface of surface layer or surface of back surface layer) of the fabric, and the fabric was immersed in water to perform non-solvent induced phase separation, thereby preparing an asymmetric membrane (In this case, an ultrafiltration membrane).

A high molecular weight PES having a viscosity number of 82 g/cm$^3$ (Measured according to ISO 1628 using a 1:1 solution of 0.01 g/mL phenol/1,2 dichlorobenzene) was used, and a 20 wt% NMP solution was applied with a 150 $\mu$m wire coater and immersed in a coagulation bath at 23°C to perform non-solvent induced phase separation.

Fig. 12 shows SEM images of 6 kinds of ultrafiltration membranes produced in this way. Each ultrafiltration membrane is labeled with three numbers. For example, the first two numbers in the ultrafiltration membrane (4-1-1) shown in Fig. 12(a) indicate 4 in Example 4 and 1 in nonwoven fabrics (1) to (3), respectively. The last number 1 indicates that the PES is applied to the surface of the surface layer of the nonwoven fabric. As another example, the ultrafiltration membrane (4-3-2) shown in Fig. 12(f) shows that the nonwoven fabric (3) is applied to the surface of the back surface layer in Example 4. That is, the six ultrafiltration membranes shown in Figs. 12(a) to (f) are common in that they are the ultrafiltration membranes of Example 4, the three ultrafiltration membranes shown in Figs. 12(a), (c), and (e) are applied with the PES to the surface of the surface layer, and the three ultrafiltration membranes shown in Figs. 12(b), (d), and (f) are applied with the PES to the surface of the back layer. Furthermore, the nonwoven fabric (1) is used for the ultrafiltration membranes shown in Figs. 12(a) and (b), the nonwoven fabric (2) is used for the ultrafiltration membranes shown in Figs. 12(c) and (d), and the nonwoven fabric (3) is used for the ultrafiltration membranes shown in Figs. 12(e) and (f).

When PES is applied to the surface of the surface layer, as the fine fiber content (That is, the ratio of the fine fiber mixture portion to the thickness of the entire nonwoven fabric) increases, the layer of PES that is not immersed in the nonwoven fabric becomes thicker (Figs. 12(a), (c), and (e)). This indicates that the average pore diameter decreases in the portion where the fine fibers are mixed due to the presence of the fine fibers, and a larger Laplace force acts, so that the penetration of the PES solution is delayed. On the other hand, when the PES is applied to the surface of the back surface layer, the layer of the PES that is not immersed in the nonwoven fabric is substantially unchanged (Figs. 12(b), (d), and (f)). This indicates that since the Laplace force is small in the back surface layer, there is almost no change in the penetration speed from the thick fiber portion to the fine fiber mixture portion via the entangled portion. As shown in Table 1, the ratio (% by weight) of the fine fibers in the nonwoven fabrics (1) to (3) as a whole is only 2.5 wt% different between the nonwoven fabric (1) and the nonwoven fabric (3). Further, as described with reference to Fig. 11, the difference in average pore size between the surface layer and the back surface layer is only 1.35 $\mu$m. In spite of such a small change in physical properties, the fact that the penetration speed greatly differs depending on the surface to which the PES is applied means that a large Laplace force acts due to the mixture of the fine fibers in the surface layer, and the inflow (penetration) of the PES solution from the surface layer to the back surface layer is suppressed.

In Example 4, a high concentration (20 wt%) PES solution was used, and the pore size of the surface of the obtained ultrafiltration membrane was small because of the low coagulation bath temperature (23°C). Therefore, the flux (L/m$^2$ h) of water under a reduced pressure of 80 kPa was measured for 6 ultrafiltration membranes, and it was 15.9 L/m$^2$ h even in the case of the highest performance ultrafiltration membrane (4-3-1). However, it was confirmed that the ultrafiltration membranes (4-1-1), (4-2-1), and (4-3-1) in which the PES was applied to the surface of the surface layer had a larger flux than the ultrafiltration membranes (4-1-2), (4-2-2), and (4-3-2) applied to the surface of the back surface layer of the same nonwoven fabric (Data not shown.).

[Example 5]

In Example 5, an asymmetric membrane (In this case, an ultrafiltration membrane) was produced by applying PES to the surface of the surface layer using the nonwoven fabric (3) produced in Example 3. The nonwoven fabric (3) used had a width of 50 cm and a length of 200 m.

As a PES solution, the same 20 wt% NMP solution as in Example 4 was used, and applied with a thickness of 120 $\mu$m using a casting knife. The temperature of the coating solution was set to 25 °C, and the temperature of the coagulation bath was set to 40°C.

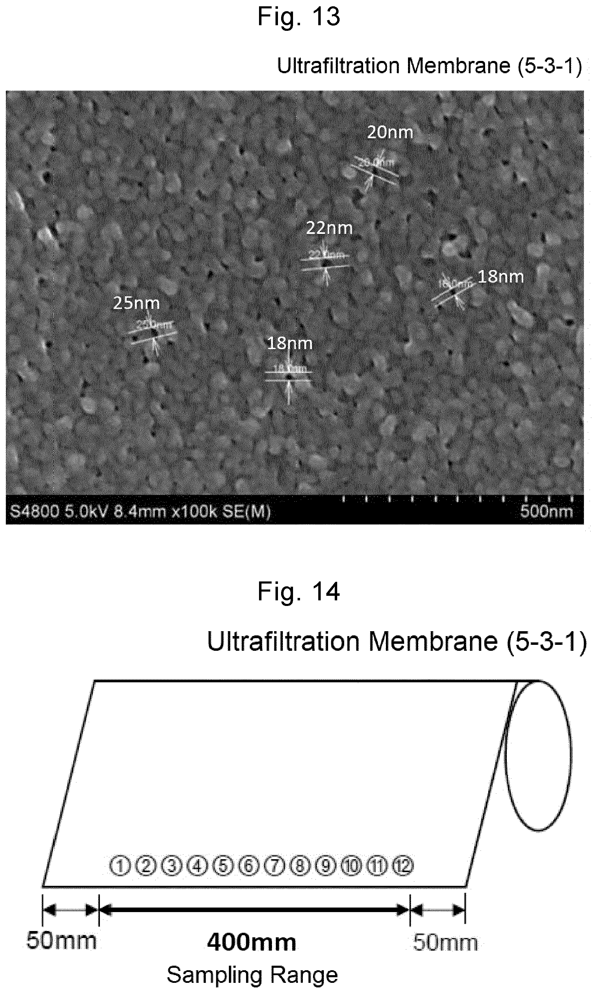

Fig. 13 shows an SEM image of the surface of the ultrafiltration membrane (5-3-1) thus prepared. Many pores of about 20 nm were formed on the outermost surface of this asymmetric film, and the distribution thereof was in the range of 25 ± 10 nm. The meanings of the three numbers are the same as those of Example 4, and the ultrafiltration membrane (5-3-1) is the ultrafiltration membrane of Example 5, which is a membrane prepared by applying the PES solution to the surface layer of the nonwoven fabric (3).

Fig. 14 shows positions at which 12 test pieces were taken out from the obtained ultrafiltration membrane having a width of 50 cm (a total of 12 test pieces were obtained from a range of a width of 400 mm excluding both ends of 50 mm), and Table 3 shows the results of evaluating the water permeation performance (flux (L/m$^2$h)) under a reduced pressure of 80 kPa for each test piece. As is apparent from Table 3, the flux of water under a reduced pressure of 80 kPa was in the range of 268.2 ± 45.7 L/m$^2$h. The NMR solution of PES has a low viscosity compared to other emplars even if it has a high molecular weight. Therefore, in the case of the conventional nonwoven fabric, the PES solution easily penetrates into the nonwoven fabric at a coating thickness of 120 $\mu$m, and usually, the permeation performance of the liquid as the separation membrane is deteriorated due to bleed-through. However, in the nonwoven fabric of the present invention in which fine fibers are mixed in the surface layer, it was possible to prepare an ultrafiltration membrane having a small pore diameter on the outermost surface and a large flux by reducing the coating thickness.

[Table 3]

| TestPiece No. | Pressure (kPa) | Perm eation Liquid | Flux (L/m$^2$h) |
|---|---|---|---|
| 1 | -80 | Water | 254.1 |
| 2 | -80 | Water | 290.0 |
| 3 | -80 | Water | 260.4 |
| 4 | -80 | Water | 296.2 |
| 5 | -80 | Water | 242.4 |
| 6 | -80 | Water | 260.4 |
| 7 | -80 | Water | 256.4 |
| 8 | -80 | Water | 260.4 |
| 9 | -80 | Water | 272.2 |
| | -80 | Water | 236.9 |
| 10 11 | -80 | Water | 274.9 |
| 12 | -80 | Water | 313.9 |
| | | | Average: 268.2 |

[Example 6]

In Example 6, in order to analyze the characteristics of the nonwoven fabric of the present invention, the nonwoven fabric (1) prepared in Example 1 was subjected to a water repellent treatment, and a water suction filtration test was performed.

Specifically, an aqueous solution containing 1.33 wt% of a fluorine-based water-and-oil repellent agent (Asahi Guard AG-E082, produced by AGC Inc.) and 1.67 wt% of a blocked isocyanate crosslinking agent was prepared, impregnated with the nonwoven fabric (1), squeezed to a predetermined squeezing rate with a mangle, and then dried at 110°C for 30 minutes with a dryer. This is referred to as a nonwoven fabric (4).

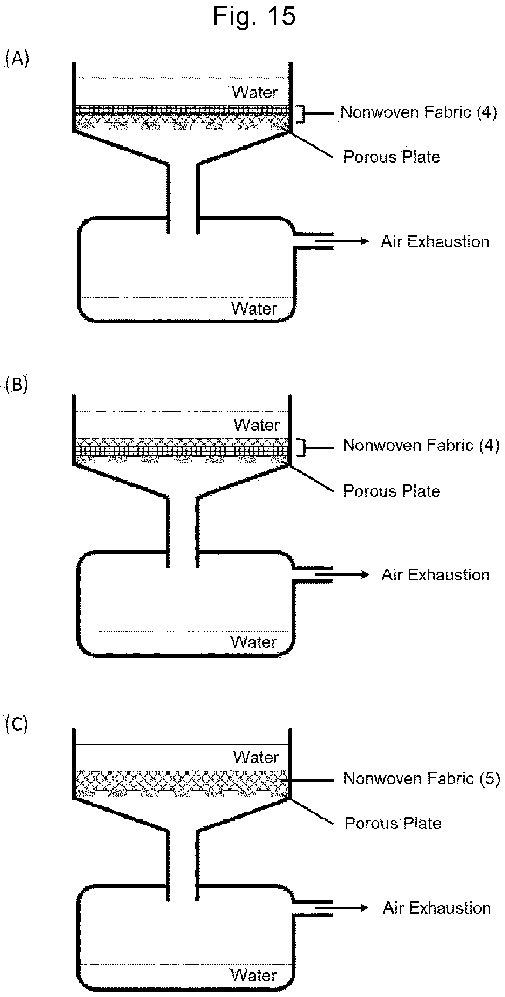

Fig. 15(A) is a schematic diagram showing a device configuration of the present test. A nonwoven fabric (4) was disposed in a suction funnel provided with a porous plate with a surface of a surface layer (layer containing fine fibers) of the nonwoven fabric (4) facing upward, a certain amount of water was poured, and then air was exhausted from an exhaust portion of a suction bottle connected to a lower side of the suction funnel by a suction pump, and a suction pressure when leakage of water to the suction bottle was confirmed by visual observation was measured. As a result, leakage of water was observed under a reduced pressure of -7.3 kPa. On the other hand, when the nonwoven fabric (4) was placed in a suction funnel with the surface of the surface layer facing down and a similar test was performed (Fig. 15(B)), leakage of water was observed under a reduced pressure of -9.3 kPa. These results indicate that when the nonwoven fabric of the present invention is subjected to a hydrophobic treatment by subjecting the nonwoven fabric to a water repellent treatment, the nonwoven fabric can function as a water-resistant film capable of preventing permeation of water up to a certain pressure difference (suction pressure), and by placing a surface layer containing fine fibers on the gas phase side (That is, the back surface layer is disposed so that the surface of the back surface layer is in contact with the liquid phase.), permeation of water can be more efficiently prevented.

[Comparative Example 1]

For comparison with Example 6, a nonwoven fabric of Comparative Example 1 was obtained by using the same producing apparatus as in Example 1, scooping fibers with a wire conveyor from a first cylinder paper machine at a basis weight of 80 g/m$^2$ to perform papermaking, and without using a second cylinder paper machine. A fiber dispersion containing 0.6 dtex in an amount of 40 wt% and 1.2 dtex in an amount of 60 wt% was placed in the first cylinder paper machine. That is, in the production of the nonwoven fabric of Comparative Example 1, 0.6 dtex fibers (medium thick fibers) and 1.2 dtex fibers (extra-thick fibers) were used, and 0.1 dtex fibers (fine fibers) were not used.

The obtained nonwoven fabric of Comparative Example 1 was subjected to a water repellent treatment according to the same procedure as in Example 6. This is referred to as a nonwoven fabric (5).

In the same manner as the test using the nonwoven fabric (4) of Example 6, a water suction filtration test was performed using the nonwoven fabric (5) (Fig. 15(C)). As a result, leakage of water was observed under a reduced pressure of -4.0 kPa, and the performance of blocking the permeation of water was lower than that in the case of using the nonwoven fabric (4). This result indicates that when a nonwoven fabric composed of fibers having a certain fiber diameter is subjected to a hydrophobic treatment by subjecting the nonwoven fabric to a water repellent treatment, and used as a water-resistant film, it is effective to prepare a nonwoven fabric containing fine fibers having a small fiber diameter and using two or more kinds of fibers having different fiber diameters.

Furthermore, the effect of including fine fibers having a small fiber diameter in the nonwoven fabric can be estimated as follows. The nonwoven fabric (4) is obtained by subjecting a nonwoven fabric (1) including fibers (fine fibers) of 0.1 dtex in a surface layer to a water repellent treatment using a fluorine-based water and oil repellent agent-containing aqueous solution. That is, since the nonwoven fabric (1) has a surface layer having a large Laplace force and a back surface layer having a small Laplace force when impregnated with a coating solution for forming a separation membrane which is a main application of the nonwoven fabric (1), and the surface layer has an average pore diameter smaller than that of the back surface layer located below the surface layer by 0.5 $\mu$m or more, in a state after being hydrophobized, a stronger suction resistance force acts on water in the surface layer having a small average pore diameter, and water resistance higher than that of the back surface layer is exhibited, and as a result, water resistance as a whole of the nonwoven fabric is considered to be improved. Here, as can be seen from the composition of the fiber dispersion described above, the ratio of the fine fibers in the fiber dispersion for the surface layer used for producing the nonwoven fabric (1) is 10 wt%. As described above, it is worth noting that a significant difference occurs in Laplace force between the surface layer and the back surface layer even under a condition where the content ratio of the fine fibers in the fiber dispersion is relatively low. Of course, the content ratio of the fine fibers is not limited to this condition, and can be appropriately adjusted, whereby the difference in Laplace force between the portion containing the fine fibers and the portion substantially not containing the fine fibers (the portion substantially composed only of the thick fibers) in the obtained nonwoven fabric can be controlled within a desired range.

As suggested from the test result using the nonwoven fabric (4) of Example 6, for the purpose of improving water resistance, the layer containing fine fibers (surface layer of nonwoven fabric) is preferably disposed on the side not in contact with water (liquid phase), and disposed such that the surface of the layer (back surface layer of nonwoven fabric) composed of a portion substantially composed of only thick fibers is in contact with water (liquid phase). In this arrangement, the pressure difference applied to the nonwoven fabric can be received by the back surface layer, that is, the layer on the side in contact with water being crushed in the thickness direction, and the water resistance of the nonwoven fabric as a whole is improved accordingly. On the other hand, when the surface of the layer containing fine fibers (the surface layer of the nonwoven fabric) is disposed so as to be in contact with water (liquid phase), the pressure difference applied to the nonwoven fabric is received only by the surface layer depending on the composition ratio in the thickness direction of the surface layer and the back surface layer, and thus the back surface layer that is not in contact with water and disposed on the gas phase side may not work effectively.

In other words, from the viewpoint of using the nonwoven fabric as a water-resistant film, fine fibers having a small fiber diameter may be mixed in the surface layer of the nonwoven fabric at the time of preparing the nonwoven fabric, and are not necessarily mixed in the entire nonwoven fabric. At the time of use, the back surface layer may be disposed so that the surface of the back surface layer configured to include a portion including only thick fibers substantially not including fine fibers and having a substantially large fiber diameter is in contact with water (liquid phase).

Industrial Applicability

The nonwoven fabric substrate for a separation membrane according to the present invention is used as a support for applying a resin solution to a separation membrane such as a microfiltration membrane (MF membrane), an ultrafiltration membrane (UF membrane), a nanofiltration membrane (NF membrane), or a reverse osmosis membrane (RO membrane).

The nonwoven fabric substrate for a separation membrane according to the present invention has a surface layer and a back surface layer in which the degree and density of entanglement of fibers constituting the nonwoven fabric are generally uniform (macroscopically), but the average pore diameter is partially different (microscopically), and the average pore diameter of the surface layer is smaller than the average pore diameter of the back surface layer. Furthermore, the fibers are entangled also at the boundary portion between the surface layer and the back surface layer constituting the nonwoven fabric, so that the mechanical strength is high, the nonwoven fabric can be thinned, and the coating thickness of the resin solution can be reduced, so that it is possible to prepare a high-performance separation membrane that is lightweight at low cost and has a large practical membrane area. Furthermore, the durability of the nonwoven fabric is improved particularly by the entanglement of the thick fibers at the entangled portion. Furthermore, it is possible to apply a polymer that has not been applied due to a bleed-through of a resin solution, and it is possible to select a polymer according to various applications.

In particular, when the nonwoven fabric of the present invention is used as a substrate for RO membrane production, energy saving in seawater desalination treatment and the like is expected.

Reference Signs List

10 Nonwoven fabric (nonwoven fabric for separation membrane)
11 Surface layer
11a Surface of surface layer
12 Back surface layer
12a Surface of back surface layer
FF Fine fiber
TF, TF1, TF2 Thick fiber
A1 Fine fiber mixture portion
A2 Thick fiber portion
A3 Entangled portion
R Resin solution (coating solution for film formation)
51 First cylinder paper machine
52 Second cylinder paper machine
51a, 52a Roll
53 Wire conveyor
DS1, DS2 Fiber dispersion liquid

**Claims**

1. A method of producing a nonwoven fabric substrate for a separation membrane, the method comprising sequentially papermaking a fiber dispersion liquid for a surface layer composed of one or more kinds of fine fibers having a small fiber diameter and one or more kinds of thick fibers having a larger fiber diameter than the fine fibers, a fiber dispersion liquid for an optional intermediate layer consisting of the thick fibers, and a fiber dispersion liquid for a back surface layer consisting of the thick fibers using a wet papermaking method.

2. The method as claimed in claim 1, wherein the fiber dispersion liquid for the surface layer is obtained by dispersing 1 to 50 wt% of fine fibers having a fiber diameter in a range of 0.01 dtex or more and 0.5 dtex or less and 50 to 99 wt% of thick fibers having a fiber diameter in a range of more than 0.5 dtex and 10 dtex or less in water, the fiber dispersion liquid for the back surface layer and the fiber dispersion liquid for the optional intermediate layer are obtained by dispersing 100 wt% of thick fibers having a fiber diameter in a range of more than 0.5 dtex and 10 dtex or less in water, and the fine fibers and the thick fibers have a fiber length in a range of 1 to 10 mm.

3. The method as claimed in claim 2, wherein the fiber dispersion liquid for the surface layer is obtained by dispersing 5 to 50 wt% of fine fibers having a fiber diameter in a range of 0.05 dtex or more and 0.5 dtex or less and 50 to 95 wt% of thick fibers having a fiber diameter in a range of more than 0.5 dtex and 3.5 dtex or less in water, and the fiber dispersion liquid for the back surface layer and the fiber dispersion liquid for the optional intermediate layer are obtained by dispersing 100 wt% of thick fibers having a fiber diameter in a range of more than 0.5 dtex and 3.5 dtex or less in water.

4. The method as claimed in any one of claims 1 to 3, further comprising subjecting a nonwoven fabric obtained by the papermaking to a surface treatment to control wettability of the nonwoven fabric.

5. A nonwoven fabric substrate for a separation membrane, wherein the nonwoven fabric substrate is obtained by the method as claimed in claim 1,

   wherein the nonwoven fabric substrate for a separation membrane includes a nonwoven fabric for a separation membrane composed of two or more layers, the nonwoven fabric substrate for a separation membrane comprising: a surface layer having a coating surface of a coating solution for membrane formation; a back surface layer; and an optional intermediate layer, wherein the surface layer has an average pore diameter smaller than that of the back surface layer or the optional intermediate layer located under the surface layer, and a difference between the average pore diameter of the surface layer and the average pore diameter of the back surface layer or the optional intermediate layer is 0.5 μm or more,

wherein the average pore diameter is determined according to the method of the description,

wherein the surface layer is composed of one or more kinds of fine fibers having a small fiber diameter and one or more kinds of thick fibers having a larger fiber diameter than the fine fibers, and the back surface layer and the optional intermediate layer are configured to include a portion consisting substantially of the thick fibers, and

wherein a fiber diameter of the fine fibers is in a range of 0.01 dtex or more and 0.5 dtex or less, and a fiber diameter of the thick fibers is in a range of more than 0.5 dtex and 10 dtex or less.

6. The nonwoven fabric substrate for a separation membrane as claimed in claim 5, wherein a fiber diameter of the fine fibers is in a range of 0.05 dtex or more and 0.5 dtex or less, and a fiber diameter of the thick fibers is in a range of more than 0.5 dtex and 3.5 dtex or less.

7. The nonwoven fabric substrate for a separation membrane as claimed in claim 5 or 6, wherein a thickness of the nonwoven fabric is in a range of 30 to 300 μm, and a composition ratio in a thickness direction of the surface layer, the back surface layer, and the optional intermediate layer (a ratio of a thickness of the surface layer to a thickness of the back surface layer and the optional intermediate layer) is 1:9 to 9:1.

8. The nonwoven fabric substrate for a separation membrane as claimed in any one of claims 5 to 7, further comprising a portion in which fibers constituting the surface layer, the back surface layer, and the optional intermediate layer are continuously entangled between the layers.

9. The nonwoven fabric substrate for a separation membrane as claimed in any one of claims 5 to 8, wherein a material of the nonwoven fabric is one or more materials selected from the group consisting of polyethylene terephthalate (PET), polyethylene (PE), polypropylene (PP), a composite material of polypropylene and polyethylene (PP/PE), polyphenylene sulfide (PPS), and mixtures thereof.

10. The nonwoven fabric substrate for a separation membrane as claimed in claim 9, wherein materials of the surface layer, the back surface layer, and the optional intermediate layer are different from each other.

11. The nonwoven fabric substrate for a separation membrane as claimed in any one of claims 5 to 10, wherein the nonwoven fabric substrate is subjected to a surface treatment for controlling wettability of the nonwoven fabric.

## Patentansprüche

1. Verfahren zum Herstellen eines Vliesstoffsubstrats für eine Trennmembran, wobei das Verfahren eine sequenzielle Papierherstellung einer Faserdispersionsflüssigkeit für eine Oberflächenschicht umfasst, die aus einer oder mehreren Arten feiner Fasern mit kleinem Faserdurchmesser und einer oder mehreren Arten dicker Fasern mit einem größeren Faserdurchmesser als die feinen Fasern, einer Faserdispersionsflüssigkeit für eine optionale Zwischenschicht, die aus den dicken Fasern besteht, und einer Faserdispersionsflüssigkeit für eine rückseitige Oberflächenschicht, die aus den dicken Fasern besteht, unter Verwendung eines Nasspapierherstellungsverfahrens gebildet ist.

2. Verfahren nach Anspruch 1, wobei die Faserdispersionsflüssigkeit für die Oberflächenschicht durch Dispergieren von 1 bis 50 Gew.-% feinen Fasern mit einem Faserdurchmesser im Bereich von 0,01 dtex oder mehr und 0,5 dtex oder weniger und 50 bis 99 Gew.-% dicken Fasern mit einem Faserdurchmesser im Bereich von mehr als 0,5 dtex und 10 dtex oder weniger in Wasser erhalten wird, die Faserdispersionsflüssigkeit für die rückseitige Oberflächenschicht und die Faserdispersionsflüssigkeit für die optionale Zwischenschicht durch Dispergieren von 100 Gew.-% dicken Fasern mit einem Faserdurchmesser im Bereich von mehr als 0,5 dtex und 10 dtex oder weniger in Wasser erhalten werden, und die feinen Fasern und die dicken Fasern eine Faserlänge im Bereich von 1 bis 10 mm aufweisen.

3. Verfahren nach Anspruch 2, wobei die Faserdispersionsflüssigkeit für die Oberflächenschicht durch Dispergieren von 5 bis 50 Gew.-% feinen Fasern mit einem Faserdurchmesser im Bereich von 0,05 dtex oder mehr und 0,5 dtex oder weniger und 50 bis 95 Gew.-% dicken Fasern mit einem Faserdurchmesser im Bereich von mehr als 0,5 dtex und 3,5 dtex oder weniger in Wasser erhalten wird, und die Faserdispersionsflüssigkeit für die rückseitige Oberflächenschicht und die Faserdispersionsflüssigkeit für die optionale Zwischenschicht durch Dispergieren von 100 Gew.-% dicken Fasern mit einem Faserdurchmesser im Bereich von mehr als 0,5 dtex und 3,5 dtex oder weniger in Wasser erhalten werden.

**4.** Verfahren nach einem der Ansprüche 1 bis 3, weiter umfassend Unterziehen eines durch die Papierherstellung erhaltenen Vliesstoffs einer Oberflächenbehandlung, um eine Benetzbarkeit des Vliesstoffs zu steuern.

**5.** Vliesstoffsubstrat für eine Trennmembran, wobei das Vliesstoffsubstrat durch das Verfahren nach Anspruch 1 erhalten wird,

wobei das Vliesstoffsubstrat für eine Trennmembran einen Vliesstoff für eine Trennmembran einschließt, der aus zwei oder mehr Schichten gebildet ist, wobei das Vliesstoffsubstrat für eine Trennmembran umfasst: eine Oberflächenschicht mit einer Beschichtungsoberfläche aus einer Beschichtungslösung für eine Membranbildung; eine rückseitige Oberflächenschicht; und eine optionale Zwischenschicht, wobei die Oberflächenschicht einen kleineren durchschnittlichen Porendurchmesser als die rückseitige Oberflächenschicht oder die optionale Zwischenschicht aufweist, die sich unter der Oberflächenschicht befindet, und ein Unterschied zwischen dem durchschnittlichen Porendurchmesser der Oberflächenschicht und dem durchschnittlichen Porendurchmesser der rückseitigen Oberflächenschicht oder der optionalen Zwischenschicht 0,5 $\mu$m oder mehr beträgt,
wobei der durchschnittliche Porendurchmesser nach dem Verfahren der Beschreibung bestimmt wird,
wobei die Oberflächenschicht aus einer oder mehreren Arten feiner Fasern mit kleinem Faserdurchmesser und einer oder mehreren Arten dicker Fasern mit einem größeren Faserdurchmesser als die feinen Fasern gebildet ist, und die rückseitige Oberflächenschicht und die optionale Zwischenschicht so konfiguriert sind, dass sie einen Abschnitt einschließen, der im Wesentlichen aus den dicken Fasern besteht, und
wobei ein Faserdurchmesser der feinen Fasern in einem Bereich von 0,01 dtex oder mehr und 0,5 dtex oder weniger liegt, und ein Faserdurchmesser der dicken Fasern in einem Bereich von mehr als 0,5 dtex und 10 dtex oder weniger liegt.

**6.** Vliesstoffsubstrat für eine Trennmembran nach Anspruch 5, wobei ein Faserdurchmesser der feinen Fasern in einem Bereich von 0,05 dtex oder mehr und 0,5 dtex oder weniger liegt, und ein Faserdurchmesser der dicken Fasern in einem Bereich von mehr als 0,5 dtex und 3,5 dtex oder weniger liegt.

**7.** Vliesstoffsubstrat für eine Trennmembran nach Anspruch 5 oder 6, wobei die Dicke des Vliesstoffs im Bereich von 30 bis 300 $\mu$m liegt, und ein Zusammensetzungsverhältnis in einer Dickenrichtung der Oberflächenschicht, der rückseitigen Oberflächenschicht, und der optionalen Zwischenschicht (ein Verhältnis einer Dicke der Oberflächenschicht zu einer Dicke der rückseitigen Oberflächenschicht und der optionalen Zwischenschicht) 1:9 bis 9:1 beträgt.

**8.** Vliesstoffsubstrat für eine Trennmembran nach einem der Ansprüche 5 bis 7, weiter umfassend einen Abschnitt, in dem Fasern, die die Oberflächenschicht, die rückseitige Oberflächenschicht und die optionale Zwischenschicht bilden, durchgehend zwischen den Schichten verwickelt sind.

**9.** Vliesstoffsubstrat für eine Trennmembran nach einem der Ansprüche 5 bis 8, wobei ein Material des Vliesstoffs ein oder mehrere Materialien ist, ausgewählt aus der Gruppe bestehend aus Polyethylenterephthalat (PET), Polyethylen (PE), Polypropylen (PP), einem Verbundmaterial aus Polypropylen und Polyethylen (PP/PE), Polyphenylensulfid (PPS) und Mischungen davon.

**10.** Vliesstoffsubstrat für eine Trennmembran nach Anspruch 9, wobei sich Materialien der Oberflächenschicht, der rückseitigen Oberflächenschicht und der optionalen Zwischenschicht voneinander unterscheiden.

**11.** Vliesstoffsubstrat für eine Trennmembran nach einem der Ansprüche 5 bis 10, wobei das Vliesstoffsubstrat einer Oberflächenbehandlung zur Steuerung einer Benetzbarkeit des Vliesstoffs unterzogen wird.

**Revendications**

**1.** Procédé de production d'un substrat de tissu non tissé pour une membrane de séparation, le procédé comprenant la fabrication de papier séquentielle à partir d'un liquide de dispersion de fibres pour une couche de surface composée d'un ou plusieurs types de fibres fines présentant un petit diamètre de fibre et d'un ou plusieurs types de fibres épaisses présentant un diamètre de fibre plus grand que les fibres fines, d'un liquide de dispersion de fibres pour une couche intermédiaire facultative consistant en les fibres épaisses, et d'un liquide de dispersion de fibres pour une couche de surface arrière consistant en les fibres épaisses en utilisant un procédé de fabrication de papier par voie humide.

**2.** Procédé selon la revendication 1, dans lequel le liquide de dispersion de fibres pour la couche de surface est obtenu en dispersant de 1 à 50 % en poids de fibres fines présentant un diamètre de fibre dans une plage de 0,01 dtex ou plus et 0,5 dtex ou moins et de 50 à 99 % en poids de fibres épaisses présentant un diamètre de fibre dans une plage de plus de 0,5 dtex et 10 dtex ou moins dans de l'eau, le liquide de dispersion de fibres pour la couche de surface arrière et le liquide de dispersion de fibres pour la couche intermédiaire facultative sont obtenus en dispersant 100 % en poids de fibres épaisses présentant un diamètre de fibre dans une plage de plus de 0,5 dtex et 10 dtex ou moins dans de l'eau, et les fibres fines et les fibres épaisses présentent une longueur de fibre dans une plage de 1 à 10 mm.

**3.** Procédé selon la revendication 2, dans lequel le liquide de dispersion de fibres pour la couche de surface est obtenu en dispersant de 5 à 50 % en poids de fibres fines présentant un diamètre de fibre dans une plage de 0,05 dtex ou plus et 0,5 dtex ou moins et de 50 à 95 % en poids de fibres épaisses présentant un diamètre de fibre dans une plage de plus de 0,5 dtex et 3,5 dtex ou moins dans de l'eau, et le liquide de dispersion de fibres pour la couche de surface arrière et le liquide de dispersion de fibres pour la couche intermédiaire facultative sont obtenus en dispersant 100 % en poids de fibres épaisses présentant un diamètre de fibre dans une plage de plus de 0,5 dtex et 3,5 dtex ou moins dans de l'eau.

**4.** Procédé selon l'une quelconque des revendications 1 à 3, comprenant en outre le fait de soumettre un tissu non tissé obtenu par la fabrication de papier à un traitement de surface pour contrôler la mouillabilité du tissu non tissé.

**5.** Substrat de tissu non tissé pour une membrane de séparation, dans lequel le substrat de tissu non tissé est obtenu par le procédé tel que revendiqué dans la revendication 1,

dans lequel le substrat de tissu non tissé pour une membrane de séparation inclut un tissu non tissé pour une membrane de séparation composé de deux couches ou plus, le substrat de tissu non tissé pour une membrane de séparation comprenant : une couche de surface présentant une surface de revêtement d'une solution de revêtement pour formation de membrane ; une couche de surface arrière ; et une couche intermédiaire facultative, dans lequel la couche de surface présente un diamètre de pore moyen plus petit que celui de la couche de surface arrière ou de la couche intermédiaire facultative située sous la couche de surface, et une différence entre le diamètre de pore moyen de la couche de surface et le diamètre de pore moyen de la couche de surface arrière ou de la couche intermédiaire facultative est de 0,5 $\mu$m ou plus,
dans lequel le diamètre de pore moyen est déterminé selon le procédé de la description,
dans lequel la couche de surface est composée d'un ou plusieurs types de fibres fines présentant un petit diamètre de fibre et un ou plusieurs types de fibres épaisses présentant un diamètre de fibre plus grand que celui des fibres fines, et la couche de surface arrière et la couche intermédiaire facultative sont configurées pour inclure une partie consistant sensiblement en les fibres épaisses, et
dans lequel un diamètre de fibre des fibres fines est dans une plage de 0,01 dtex ou plus et 0,5 dtex ou moins, et un diamètre de fibre des fibres épaisses est dans une plage de plus de 0,5 dtex et 10 dtex ou moins.

**6.** Substrat de tissu non tissé pour une membrane de séparation selon la revendication 5, dans lequel un diamètre de fibre des fibres fines est dans une plage de 0,05 dtex ou plus et 0,5 dtex ou moins, et un diamètre de fibre des fibres épaisses est dans une plage de plus de 0,5 dtex et 3,5 dtex ou moins.

**7.** Substrat de tissu non tissé pour une membrane de séparation selon la revendication 5 ou revendication 6, dans lequel une épaisseur du tissu non tissé est dans une plage de 30 à 300 $\mu$m, et un rapport de composition dans une direction d'épaisseur de la couche de surface, de la couche de surface arrière et de la couche intermédiaire facultative (un rapport d'une épaisseur de la couche de surface sur une épaisseur de la couche de surface arrière et de la couche intermédiaire facultative) est de 1:9 à 9:1.

**8.** Substrat de tissu non tissé pour une membrane de séparation selon l'une quelconque des revendications 5 à 7, comprenant en outre une partie dans laquelle des fibres constituant la couche de surface, la couche de surface arrière et la couche intermédiaire facultative sont enchevêtrées en continu entre les couches.

**9.** Substrat de tissu non tissé pour une membrane de séparation selon l'une quelconque des revendications 5 à 8, dans lequel un matériau du tissu non tissé est un ou plusieurs matériaux sélectionnés dans le groupe consistant en polyéthylène téréphtalate (PET), polyéthylène (PE), polypropylène (PP), un matériau composite de polypropylène et de polyéthylène (PP/PE), du polyphénylène sulfide (PPS), et des mélanges de ceux-ci.

**10.** Substrat de tissu non tissé pour une membrane de séparation selon la revendication 9, dans lequel les matériaux de la couche de surface, de la couche de surface arrière et de la couche intermédiaire facultative sont différents les uns des autres.

11. Substrat de tissu non tissé pour une membrane de séparation selon l'une quelconque des revendications 5 à 10, dans lequel le substrat de tissu non tissé est soumis à un traitement de surface pour contrôler la mouillabilité du tissu non tissé.

# Fig. 1

# Fig. 2

# Fig. 3

(A)

(B)

# Fig. 4

(A) R

(B) R

# Fig. 5

# Fig. 6

# Fig. 7

(a)

(b)

# Fig. 8

(a)

(b)

(c)

(d)

(e)

Fig. 9

(a)

(b)

# Fig. 10

(a)

(b)

Position from Surface of Surface Layer Side
(Section Number)

## Fig. 11

## Fig. 12

| (a) | (c) | (e) |
|---|---|---|
| Ultrafiltration Membrane (4-1-1) | Ultrafiltration Membrane (4-2-1) | Ultrafiltration Membrane (4-3-1) |

| (b) | (d) | (f) |
|---|---|---|
| Ultrafiltration Membrane (4-1-2) | Ultrafiltration Membrane (4-2-2) | Ultrafiltration Membrane (4-3-2) |

## Fig. 13

Ultrafiltration Membrane (5-3-1)

## Fig. 14

Ultrafiltration Membrane (5-3-1)

# Fig. 15

(A)

Water

Nonwoven Fabric (4)

Porous Plate

Air Exhaustion

Water

(B)

Water

Nonwoven Fabric (4)

Porous Plate

Air Exhaustion

Water

(C)

Water

Nonwoven Fabric (5)

Porous Plate

Air Exhaustion

Water

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60238103 A
- JP 61222506 A
- JP 2003245530 A
- JP H11347383 A
- WO 2010126113 A
- JP 2000005576 A
- EP 2659995 A1